(19) Europäisches Patentamt European Patent Office Office européen des brevets

(11) **EP 4 575 456 A1**

(12) **EUROPEAN PATENT APPLICATION**

(43) Date of publication:
**25.06.2025 Bulletin 2025/26**

(21) Application number: **24185820.8**

(22) Date of filing: **01.07.2024**

(51) International Patent Classification (IPC):
**G01N 15/00** (2024.01)  **G01N 21/45** (2006.01)
**G01N 21/47** (2006.01)

(52) Cooperative Patent Classification (CPC):
**G01N 21/45; G01N 15/1433; G01N 15/1468;**
**G01N 21/4795; G02B 21/0056;** G01N 2015/1006;
G01N 2015/1454; G01N 2015/1493

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **22.12.2023 EP 23220099**

(71) Applicant: **Max-Planck-Gesellschaft zur**
**Förderung der**
**Wissenschaften e.V.**
**80539 München (DE)**

(72) Inventors:
• **Sandoghdar, Vahid**
 **91058 Erlangen (DE)**
• **Mazaheri, Mahdi**
 **91058 Erlangen (DE)**
• **Kasaian, Kiarash**
 **91058 Erlangen (DE)**

(74) Representative: **v. Bezold & Partner**
**Patentanwälte - PartG mbB**
**Ridlerstraße 57**
**80339 München (DE)**

(54) **APPARATUS AND METHOD FOR INTERFEROMETRIC SCATTERING (ISCAT) MICROSCOPY EMPLOYING ILLUMINATION LIGHT WITH TAILORED SPATIAL COHERENCE**

(57) An interferometric scattering microscopy (iS-CAT) apparatus 100 for iSCAT-based imaging a sample under investigation, for obtaining a sample image, comprises an optical imaging system with an illumination device 10, an optical relaying device 20 including a beam splitting device 21, a sample receptacle 30 and a detector device 40. The illumination device 10 includes a laser source device 11 being arranged for creating illumination light 2. The optical relaying device 20 is arranged between the laser device 11 and the sample receptacle 30 for relaying the illumination light 2 to the sample receptacle 30. The beam splitting device 21 is arranged for deflecting a first portion 2A of the illumination light 2 towards the sample receptacle 30, deflecting a second portion 2B of the illumination light 2 towards the detector device 40 and for superimposing scattering light 2C scattered at a sample 1 arranged at the sample receptacle 30 with the second portion 2B of the illumination light 2. The detector device 40 is arranged for receiving the superimposed scattering light 2C and second portion 2B of the illumination light 2 in an image plane of the optical imaging system. A coherence setting device 50 is arranged for targeted setting a point spread function of the optical imaging system in the image plane by applying and controlling a spatial degree of coherence of the illumination light 2 output by the laser source device 11. Furthermore, a method of iSCAT microscopy, including iSCAT-based imaging a sample 1, in particular including bioparticles, like protein particles and/or protein molecules, is described, wherein the iSCAT apparatus 100 is employed.

FIG. 1

## Description

Field of the invention

The invention relates to an interferometric scattering microscopy (iSCAT) apparatus, being configured for iSCAT-based imaging a sample under investigation, comprising an illumination device, a beam splitting device, a sample receptacle and a detector device. Furthermore, the invention relates to a method for iSCAT-based imaging a sample under investigation. Applications of the invention are available e. g. in the fields of microscopy imaging and sensing of sample particles and/or sample structures, like particles of biological samples, e. g. biological cells or cell components, and in material science and/or semiconductor technology

Prior art

In the present specification, reference is made to the following prior art illustrating the technical background of the invention:

[1] K. Lindfors, T. Kalkbrenner, P. Stoller, and V. Sandoghdar, "Detection and Spectroscopy of Gold Nanoparticles Using Supercontinuum White Light Confocal Microscopy" Phys. Rev. Lett. 93, 037401 (2004);

[2] R. W. Taylor and V. Sandoghdar, "Interferometric Scattering Microscopy: Seeing Single Nanoparticles and Molecules via Rayleigh Scattering" Nano Lett. 19, 4827-4835 (2019);

[3] Y.-H. Lin, W.-L. Chang, and C.-L. Hsieh, "Shot-noise limited localization of single 20 nm gold particles with nanometer spatial precision within microseconds" Opt. Express 22, 9159-9170 (2014);

[4] H. Ewers, V. Jacobsen, E. Klotzsch, et al., "Label-free optical detection and tracking of single virions bound to their receptors in supported membrane bilayers" Nano Lett. 7, 2263-2266 (2007);

[5] P. Kukura, H. Ewers, C. Müller, et al., "High-speed nanoscopic tracking of the position and orientation of a single virus" Nat. Methods 6, 923-927 (2009);

[6] R. F. Garmann, A. M. Goldfain, C. R. Tanimoto, et al., "Single-particle studies of the effects of RNA-protein interactions on the self-assembly of RNA virus particles" Proc. Natl. Acad. Sci. U.S.A. 119, e2206292119 (2022);

[7] Y.-F. Huang, G.-Y. Zhuo, C.-Y. Chou, et al., "Coherent brightfield microscopy provides the spatiotemporal resolution to study early stage viral infection in live cells" ACS Nano 11, 2575-2585 (2017);

[8] A. D. Kashkanova, M. Blessing, A. Gemeinhardt, et al., "Precision size and refractive index analysis of weakly scattering nanoparticles in polydispersions" Nat. Methods 19, 586-593 (2022);

[9] A. D. Kashkanova, M. Blessing, M. Reischke, et al., "Label-free discrimination of extracellular vesicles from large lipoproteins" J. Extracell. Vesicles 12, 12348 (2023);

[10] J. Ortega Arroyo, J. Andrecka, K. Spillane, et al., "Label-free, all-optical detection, imaging, and tracking of a single protein" Nano Lett. 14, 2065-2070 (2014);

[11] M. Piliarik and V. Sandoghdar, "Direct optical sensing of single unlabelled proteins and super-resolution imaging of their binding sites" Nat. Commun. 5, 4495 (2014);

[12] G. Young, N. Hundt, D. Cole, et al., "Quantitative mass imaging of single biological macromolecules" Science 360, 423-427 (2018);

[13] M. Dahmardeh, H. Mirzaalian Dastjerdi, H. Mazal, et al., "Self-supervised machine learning pushes the sensitivity limit in label-free detection of single proteins below 10 kDa" Nat. Methods 20, 442-447 (2023);

[14] M. Celebrano, P. Kukura, A. Renn, and V. Sandoghdar, "Single-molecule imaging by optical absorption" Nat. Photonics 5, 95-98 (2011);

[15] Y. Park, W. Choi, Z. Yaqoob, et al., "Speckle-field digital holographic microscopy" Opt. Express 17, 12285-12292 (2009);

[16] M. N. Akram, Z. Tong, G. Ouyang, et al., "Laser speckle reduction due to spatial and angular diversity introduced by fast scanning micromirror" Appl. Opt. 49, 3297-3304 (2010);

[17] P. F. Almoro, G. Pedrini, P. N. Gundu, et al., "Phase microscopy of technical and biological samples through random phase modulation with a diffuser" Opt. Lett. 35, 1028-1030 (2010);

[18] Y. Choi, T. D. Yang, K. J. Lee, and W. Choi, "Full-field and single-shot quantitative phase microscopy using dynamic speckle illumination" Opt. Lett. 36, 2465-2467 (2011);

[19] B. Redding, M. A. Choma, and H. Cao, "Speckle-free laser imaging using random laser illumination" Nat. Photonics 6, 355-359 (2012);

[20] M. Nixon, B. Redding, A. Friesem, et al., "Efficient method for controlling the spatial coherence of a laser" Opt. Lett. 38, 3858-3861 (2013);

[21] T. H. Nguyen, C. Edwards, L. L. Goddard, and G. Popescu, "Quantitative phase imaging with partially coherent illumination" Opt. Lett. 39, 5511-5514 (2014);

[22] H. Farrokhi, T. M. Rohith, J. Boonruangkan, et al., "High-brightness laser imaging with tunable speckle reduction enabled by electroactive micro-optic diffusers" Sci. Rep. 7, 15318 (2017);

[23] V. Bianco, P. Memmolo, M. Leo, et al., "Strategies for reducing speckle noise in digital holography" Light Sci. Appl.7, 48 (2018). [24] Cao, H., Chriki, R., Bittner, S., Friesem, A. A. & Davidson, N. Complex lasers with controllable coherence. Nat. Rev. Phys. 1, 156-168 (2019);

[24] H. Cao, R. Chriki, S. Bittner, et al., "Complex lasers with controllable coherence" Nat. Rev. Phys. 1, 156-168 (2019);

[25] I.-B. Lee, H.-M. Moon, J.-S. Park, et al., "Three-dimensional interferometric scattering microscopy via remote focusing technique" Opt. Lett. 45, 2628-2631 (2020);

[26] P. Kukura, H. Ewers, C. Müller, et al., "High-speed nanoscopic tracking of the position and orientation of a single virus" Nat. Methods 6, 923-927 (2009);

[27] H. M. Dastjerdi, M. Dahmardeh, A. Gemeinhardt, et al., "Optimized analysis for sensitive detection and analysis of single proteins via interferometric scattering microscopy" J. Phys. D: Appl. Phys. 55, 054002 (2021);

[28] R. W. Taylor, R. G. Mahmoodabadi, V. Rauschenberger, et al., "Interferometric scattering microscopy reveals microsecond nanoscopic protein motion on a live cell membrane" Nat. Photonics 13, 480-487 (2019);

[29] N. Jiao, S. Lin, D. Feng, et al., "Defocus-integration interferometric scattering microscopy for speckle suppression and enhancing nanoparticle detection on substrate" arXiv:2402.16527 (2024);

[30] Y.-T. Hsiao, T.-Y. Wu, B.-K. Wu, et al., "Spinning disk interferometric scattering confocal microscopy captures millisecond timescale dynamics of living cells" Opt. Express 30, 45233-45245 (2022);

[31] M. Küppers, D. Albrecht, A. D. Kashkanova, et al., "Confocal interferometric scattering microscopy reveals 3D nanoscopic structure and dynamics in live cells" Nat. Commun. 14, 1962 (2023);

[32] R. G. Mahmoodabadi, R. W. Taylor, M. Kaller, et al., "Point spread function in interferometric scattering microscopy (iSCAT). Part I: aberrations in defocusing and axial localization" Opt. Express 28, 25969-25988 (2020);

[33] K. Kasaian, M. Mazaheri, and V. Sandoghdar, "Long-range three-dimensional tracking of nanoparticles using interferometric scattering (iSCAT) microscopy" arXiv:2401.12939 (2024);

[34] P. J. Tadrous, "Use of a refractive index-coupled diffuser to both generate and measure high-numerical aperture illumination for light microscopy" J. Microsc. 292, 135-147 (2023);

[35] S. Wäldchen, J. Lehmann, T. Klein, et al., "Light-induced cell damage in live-cell super-resolution microscopy" Sci. Rep. 5, 15348 (2015);

[36] J. Nixon-Abell, C. J. Obara, A. V. Weigel, et al., "Increased spatiotemporal resolution reveals highly dynamic dense tubular matrices in the peripheral ER" Science 354, aaf3928 (2016);

[37] H. T. Perkins and V. Allan, "Intertwined and finely balanced: endoplasmic reticulum morphology, dynamics, function, and diseases" Cells 10, 2341 (2021);

[38] C. Ounkomol, S. Seshamani, M. M. Maleckar, et al., "Label-free prediction of three-dimensional fluorescence images from transmitted-light microscopy" Nat. Methods 15, 917-920 (2018);

[39] V. Badrinarayanan, A. Kendall, and R. Cipolla, "SegNet: A deep convolutional encoder-decoder architecture for image segmentation" IEEE Trans. Pattern Anal. Mach. Intell. 39, 2481-2495 (2017);

[40] A. Curtis, "The mechanism of adhesion of cells to glass: a study by interference reflection microscopy" J. Cell Biol. 20, 199-215 (1964);

[41] L. Limozin and K. Sengupta, "Quantitative reflection interference contrast microscopy (RICM) in soft matter and cell adhesion" ChemPhysChem 10, 2752-2768 (2009);

[42] V. A. Barr and S. C. Bunnell, "Interference reflection microscopy" Curr. Protoc. Cell Biol. 45, 4-23 (2009);

[43] T. H. Nguyen, M. E. Kandel, M. Rubessa, et al., "Gradient light interference microscopy for 3D imaging of unlabeled specimens" Nat. Commun. 8, 210 (2017);

[44] A. D. Kashkanova, A. B. Shkarin, R. G. Mahmoodabadi, et al., "Precision single-particle localization using radial variance transform" Opt. Express 29, 11070-11083 (2021);

[45] J. W. Goodman, "Some fundamental properties of speckle" J. Opt. Soc. Am. 66, 1145-1150 (1976); and

[46] I. Hamarová, P. Šmíd, P. Horváth, and M. Hrabovsky', "Methods for determination of mean speckle size in simulated speckle pattern" Meas. Sci. Rev. 14, 177-182 (2014).

Label-free optical imaging is of great interest in many areas of science because it allows to visualize the structure and function of a sample in its unperturbed state free of label substances. Several contrast mechanisms such as Raman spectroscopy or second harmonic generation have been pursued, but the small cross section of these processes hampers their widespread use, especially in ultrasensitive applications. In particular, interferometric scattering (iSCAT) microscopy has emerged as a powerful and sensitive tool for detecting nanoparticles and proteins with unparalleled precision. Recent progress in interferometric scattering microscopy (iSCAT) has demonstrated that the intrinsic cross section of Rayleigh scattering is large enough to detect and image matter at the nanoscopic level [1, 2], including gold nanoparticles (GNPs) [1, 3], viruses [4-7], extracellular vesicles [8, 9], semiconductor quantum dots [5], proteins [10-13] and even single dye molecules [14].

The iSCAT signal is produced by the interference of a beam of light with the light scattered by a nano-object. Because the scattering signal does not saturate, a single nanoparticle can generate large signals, leading to a high shot-noise limited sensitivity and high temporal resolution. iSCAT microscopy can be performed in several illumination and detection schemes [2]. A wide-field illumination mode is particularly desirable because it can provide high-speed imaging, only limited by the camera technology. The combination of wide-field illumination and detection in reflection has proven particularly favorable because it provides common-path mechanical stability, interferometric resolution in the axial direction, and high-speed imaging. The high sensitivity of iSCAT, in particular when imaging complex samples like biological cells, also results in an omnipresence of a speckle-like background because even the slightest corrugations or refractive index modulations in the sample, usually arranged randomly, scatter enough to generate a complex interference pattern [2].

Speckles have been known to pose a formidable challenge to numerous imaging applications, such as holography and microscopy through turbid media. Various strategies have been explored for averaging over speckle patterns, whereby most approaches exploit the spatial and temporal coherences of the illumination or detection paths [15-25]. In most sensitive iSCAT applications such as the detection of single molecules, quantum dots and proteins [5, 11, 14], the substrate and the sample are chosen to minimize speckles down to a small residual level. Acquired images are then corrected by schemes such as differential rolling averaging [11, 12, 26, 27], cross- correlation analysis [28], machine learning [13], and defocused integration [29]. Measurements in transmission [30] and in the confocal mode [31] have also been used to bypass speckles, albeit with some compromises. The former method sacrifices the enhanced axial resolution of iSCAT because the interferometric information about the traveling phase difference between the reference and the scattered field is lost. Confocal imaging sacrifices speed when imaging a large field of view (FOV).

One of the most timely applications of label-free microscopy is in the area of cell biology, where various structural and dynamical processes in live cells are at the center of attention. Ideally, one would like to image cells in 3D, over a large FOV, at high speed, at high resolution, with nanoparticle-sensitivity, and in a label-free fashion. However, no single method is available that delivers all these desirable features. Recently, it has been shown that confocal iSCAT (C-iSCAT) allows speckle-free 3D imaging of live cells, albeit at the cost of much slower imaging than in WF-iSCAT [31].

Objective of the invention

The objective of the invention is to provide an improved apparatus and method for interferometric scattering microscopy, being capable of avoiding limitations of conventional techniques. In particular, the objective of the invention is to provide iSCAT microscopy being capable of improved background suppression, in particular with improved suppression of speckle-like background from the sample and/or sample substrate, accessing a larger FOV in wide-field applications, imaging with improved imaging resolution, e.g. for imaging biological nanoparticles and nanostructures, imaging with increased imaging speed, and/or improving a quantitative assessment of the physical properties of nanoparticles and nanostructures, such as size, mass, morphology, refractive index, and/or particle velocity, of e.g., biological materials. Furthermore, the iSCAT microscopy is to be provided for new imaging applications, in particular in imaging of biological samples, e. g. biological cells or cell components, in material sciences and/or semiconductor technology.

Summary of the invention

These objectives are correspondingly solved by an apparatus and a method for interferometric scattering microscopy, comprising the features of the independent claims, respectively. Preferred embodiments and applications of the invention arise from the dependent claims.

According to a first general aspect of the invention, the above objective is solved by an interferometric scattering microscopy apparatus, being configured for iSCAT-based imaging a sample under investigation, for obtaining a microscopic sample image, said interferometric scattering microscopy apparatus comprising an optical imaging system with an illumination device, an optical relaying device including a beam splitting device, a sample receptacle and a detector device.

The illumination device includes a laser source device being arranged for creating illumination light. The optical relaying device is arranged between the laser device and the sample receptacle for relaying the illumination light to the sample receptacle. The beam splitting device, like a beam splitting cube and/or beam splitting mirrors, is arranged for deflecting a first portion of the illumination light towards the sample receptacle (e.g., a transparent sample substrate carrying a sample to be investigated), deflecting a second portion of the illumination light towards the detector device and for superimposing scattering light scattered at a sample arranged at the sample receptacle with the second portion of the illumination light.

The detector device is arranged for receiving the superimposed scattering light and second portion of the illumination light in an image plane of the optical imaging system. Preferably, the detector device may receive the superimposed light fields with a defined tolerance for defocusing based on the system's depth of field. The detector device may be coupled with an image processing device being arranged for receiving detector output signals and processing the detector output signals for creating a microscopic image of the sample. Signal and image processing may be implemented as known from conventional iSCAT microscopy.

According to the invention, the iSCAT microscopy apparatus further comprises a coherence setting device being arranged for targeted setting the point spread function (interferometric point spread function, iPSF) of the optical imaging system in the image plane by applying and controlling a spatial degree of coherence of the illumination light output by the laser source device.

According to a second general aspect of the invention, the above objective is solved by a method of interferometric microscopy, including iSCAT-based imaging a sample under investigation, in particular including bioparticles, like protein particles and/or protein molecules, for obtaining a sample image, wherein an interferometric scattering microscopy apparatus according to the first general aspect of the invention or an embodiment thereof is employed, wherein the point spread function of the optical imaging system at the sample receptacle is set with the coherence setting device by applying and controlling a spatial degree of coherence of the illumination light output by the laser source device.

Generally, the coherence setting device (or: coherence setting element) is capable of varying the relative phases, wavefronts and/or amplitudes of the light field wave contributions included in the illumination light, preferably in a randomized manner. The coherence setting device may be provided as a component of the optical imaging system, e.g., in and/or additionally to the optical relaying device. Additionally or alternatively, the coherence setting device may be included and/or provided by the illumination device.

The illumination light initially may be created by the light source device as coherent light. The coherence setting device may be arranged for setting a partial coherence of the illumination light with a degree of coherence being reduced compared with the coherence of the illumination light output by the laser device. Accordingly, the illumination light (measuring light provided by the illumination device and relayed to the beam splitting device) has a spatial coherence, which is reduced and/or shaped (or: tailored) in a targeted manner to a predetermined degree compared with the coherence of the initial laser light by the effect of the coherence setting device. Preferably, the coherence setting device may be configured for applying spatial de-coherence to the laser light output by the laser source device.

The coherence setting device is arranged for setting the interferometric point spread function of the optical imaging system in the image plane of the optical imaging system. The interferometric point spread function is a quantitative measure of an image of a point in the sample imaged by the interferometric scattering setup. With the coherence setting device, a stochastic randomization of relative phases, wavefronts and/or amplitudes of the light field wave contributions is obtained, in particular at the sample receptacle, especially in the sample. The degree of stochastic randomization of relative phases, wavefronts and/or amplitudes of the light field wave provides a quantitative degree of coherence of the illumination light, which is set in targeted manner by the coherence setting device. The degree of coherence may be set in dependency on an imaging task of the iSCAT microscopy apparatus. In particular, the degree of coherence may be selected by a user of the iSCAT microscopy apparatus in dependency on a spatial imaging resolution to be obtained and/or in dependency on the imaging method, like particle tracking, e.g., based on numerical simulations and/or experimental tests. Alternatively or additionally, the degree of coherence may be set in dependency on a result of an image analysis of a sample image collected with the iSCAT microscopy apparatus.

In particular for collecting sample images, the iPSF may be set such the spatial imaging resolution is optimized and speckles in the sample image are suppressed. In particular for particle tracking, the iPSF may be set such that concentric iPSF rings are sufficiently distinguished from each other and speckles are suppressed, thus allowing an encoding of the axial position of sample elements, like e.g., nanoparticles.

Advantageously, the inventors have found that a speckle-like background from a sample can be strongly suppressed in wide-field iSCAT (WF-iSCAT) by controlling the spatial coherence of the illumination beam, introducing an operation mode which may be called diffused-illumination iSCAT (D-iSCAT) or equivalently tailored spatial coherence iSCAT (TSC-iSCAT). The invention surpasses the speckle problems of conventional techniques while preserving the sensitivity of the wide-field iSCAT microscopy. This may be realized in particular by the capability of precisely engineering e.g., the spatial coherence of the illumination, e.g., via a strategically positioned rotating diffuser mask coupled with an adjustable iris in the illumination path. This allows for the customization of the interferometric point spread function (iPSF) to suit diverse applications. The inventive approach may achieve a substantial imaging frame rate of e.g., at least 25 kHz, with a field of view of at least 80 $\mu$m $\times$ 80 $\mu$m, while maintaining diffraction-limited resolution, thus allowing the collection of sequences of moving images (video sequences). Furthermore, in particular by optionally lever-aging a series of deep neural networks, the inventors have achieved automatic segmentation of images of biological samples, like e.g., the endoplasmic reticulum (ER) network, highlighting the invention's capability for tracking the intracellular dynamics, e.g., in biological cells. As an illustrated example described below, the inventors have experimentally shown the method's high throughput by 3D tracking of over a thousand vesicles in an entire COS-7 cell. The invention promises to bridge the gap between high-resolution label-free imaging, sensitive detection, and 3D tracking. Advantageously, the inventive TSC-iSCAT is suited for label-free studies on complex systems such as live cells with high spatiotemporal resolution.

The inventors in particular have shown that the speckle-like background from the sample and/or sample substrate can be strongly suppressed in wide-field iSCAT (WF-iSCAT) by engineering the spatial coherence of the illumination beam. The inventors have demonstrated concrete implementations of embodiments of the invention by using e. g., a rotating diffuser mask in the path of the incident laser beam. The inventors have shown that in addition to eliminating unwanted speckles, a considerably larger FOV can be accessed in diffused-illumination (tailored spatial coherence) iSCAT microscopy.

Preferably, the coherence setting device may be configured for setting the spatial coherence of the illumination light such that a coherence volume (a part of space where radiation is coherent, e.g., product of coherence area and coherence length) in the sample has a characteristic dimension, e.g., cross-sectional dimension of coherence volume, that generates the point spread function in the image plane with a characteristic coherence length that is smaller than the characteristic correlation length of the sample image, imaged without the coherence setting device. In terms of the method, according to a further preferred embodiment of the invention, the spatial coherence of the illumination light may be set such that the coherence volume in the sample has a characteristic dimension that generates an iPSF in the image plane with a characteristic coherence length that is smaller than the characteristic correlation length of the sample image without the coherence setting device.

In particular, the coherence volume may represent a limited spatial range wherein the radiation is coherent, while the overall radiation in at least two different spatial ranges in the sample each having the coherence volume is incoherent. Advantageously, the coherence volume may be sufficiently small so that spatial imaging resolution of neighbouring sample features is not impaired by background speckle light (or the influence of the background speckle light on imaging is ne-glectable).

From an application view, the coherence volume at the sample may have a cross-section preferably selected in a range from 250 nm to 1 $\mu$m, in particular for high resolution imaging tasks, or in a range from 1 $\mu$m to 3 $\mu$m, in particular for particle tracking tasks.

Advantageously, multiple different techniques are available for reducing the degree of spatial coherence of the light source to get around the speckle problem. In particular, rotating diffusers, e.g. made of ground glass, diffusing colloidal particles in a suspension, and/or moving micromechanical mirrors have been used. Thus, according to preferred embodiments of the invention, the coherence setting device may be configured for at least one of incorporating a time-varying scattering system into the illumination device, coherence setting with a refractive-index modulating medium, coherence setting with a micro-electromechanical mirror array, and increasing the number of transverse lasing modes of the laser source device.

According to a particularly preferred embodiment of the invention, the coherence setting device may comprise, as a time-varying scattering system, a movable, in particular rotatable, diffuser mask including a distribution of mask elements and being arranged for applying time-varying, spatially randomized wavefront features to the illumination light. The diffuser mask may be arranged for transmitting or reflecting the light path in the coherence setting device. The mask elements (or: mask grains, mask particles, mask features) influence the phases, wavefronts and/or amplitudes of the light field wave contributions included in the illumination light in a stochastic manner. Advantageously, the remaining coherence after reflection and/or transmission and projection (imaging) of the diffuser mask into the sample may be proportional to an effective size (also called effective grain size) of the mask elements projections in the sample. Preferred physical dimensions of the mask elements may be selected in a range from 10 nm to 100 $\mu$m, while a preferred effective size of the mask elements (projected into the sample) may be selected in a range from 100 nm to 3 $\mu$m.

Additionally, according to a further preferred embodiment of the invention, the coherence setting device may comprise at least one coherence setting component of the optical relaying device. Advantageously, the optical relaying device or a part thereof may be used for further controlling or adjusting the coherence created by the coherence setting device.

Particularly preferred, the at least one coherence setting component may comprise at least one lens (including e.g., an illumination lens and/or the objective of the microscope), having a focal length and being arranged between the laser device and the sample receptacle, e.g. between the diffuser mask and the beam splitting device, for projecting the diffuser mask to the sample receptacle, in particular into the sample, and/or between the laser device and the diffuser mask, for projecting the illumination light to the diffuser mask. The optical relaying device, in particular the at least one coherence setting component thereof, may be arranged for setting an effective grain size of the mask elements of the diffuser mask projected into the sample and adjusted in particular by the focal length of the optical relaying device. The coherence of the illumination light may be set by the effective grain size of the mask elements. The effective grain size is determined by the projection of the diffuser mask on the sample, i. e. by the final illumination at the position of the sample.

Advantageously, the optical relaying device allows setting the degree of coherence of the illumination light by setting the effective grain size. Preferably, the optical relaying device may be configured for providing the effective grain size in a range from about 1/2 of the wavelength of the illumination light (in particular centre wavelength of the laser device) divided by the numerical aperture of the optical imaging system to about five times the wavelength of the illumination light divided by the numerical aperture of the optical imaging system.

The optical relaying device may comprise illumination optics including e.g., at least one optical lens providing the focal length for projecting the diffuser mask into the sample. The optical relaying device may be adapted for exchanging the lens, e.g., it may comprise a lens receptacle arranged for accommodating a lens, e.g., with a focal length selected for a particular application, or it may comprise a lens receptacle arranged for accommodating multiple lenses and for moving one of the lenses into the illumination path of the illumination device.

Preferably, at least one optical lens of the optical relaying device may have a variable, e.g. tunable, focal length, and the optical relaying device may be arranged for setting the effective (projected) grain size by adjusting the focal length of the at least one optical lens. Advantageously, this feature allows controlling the effective grain size without changing the diffuser mask of the coherence setting device and/or even without employing the diffuser mask.

Particularly preferred, the optical relaying device may comprise at least one tunable lens having a tunable focal length and being arranged between the laser source device and the sample receptacle. For example, the diffuser mask may be positioned between two lenses, wherein at least one of the lenses is the tunable lens with the tunable focal length. The tunable lens with the tunable focal length may be arranged downstream from the diffuser mask.

Setting the effective grain size with the optical relaying device, in particular with the tunable lens, is not restricted to the embodiments using the movable diffuser mask. The optical relaying device, e.g., with variable focal length, also can be used in equal manner for setting the degree of coherence alone or with other embodiments, employing e.g., coherence setting with the micro-electromechanical mirror array.

Setting the effective grain size may be provided in dependency on TSC-iSCAT images collected such that speckle background is suppressed to a certain degree. A loop control may be employed for setting the effective grain size in dependency on image features. In particular, the focal length of the optical relaying device may be set for increasing the spatial de-coherence if the spatial imaging resolution obtained by image analysis is not sufficient for imaging a predetermined detail to be investigated.

According to a further advantageous embodiment of the invention, the coherence setting device may comprise a driving device being arranged for setting a speed of diffuser mask movement. Advantageously, the driving device provides an additional degree of freedom in adjusting the illumination light. Preferably, the speed of diffuser mask movement, e.g. rotation frequency, may be faster than imaging speed of image collection with the detector device, so that the image collection is not impaired by the mask movement. Alternatively, the speed of diffuser mask movement may be slower than the imaging speed, e.g., if averaging of collected images after image collection is provided.

Preferably, the coherence setting device may comprise a spatial mask, in particular an aperture (iris, iris diaphragm), being arranged to suppress reflection light at the sample plane created by high angle k-vectors generated by the diffuser mask. Advantageously, the spatial mask allows a further improvement of the imaging contrast.

According to a further preferred embodiment of the invention, the detector device may be coupled with the image processing device being arranged for processing sample images by applying a neural network on detector output data. Additionally or alternatively, other signal processing techniques may be applied, using e.g., edge recognition in images.

The characteristic dimension of the coherence volume may be equal to or smaller than an average distance of sample features included in the sample and resolved in the sample image. Generally, a sample feature may comprise a structure of the sample and/or sample substrate being capable of an optical interaction with the illumination light, e.g., by absorption or scattering. Preferably, a sample feature may comprise a detail of the sample to be imaged. For example, if sample features, like certain structures and/or particles, like vesicles or protein molecules, and/or features of a sample substrate, like roughness or index variations of a substrate, e.g. a glass substrate, are included in the sample and/or sample substrate, the coherence volume may be such that the light in different non-overlapping coherence volumes is incoherent.

Alternatively, another coherence volume, e.g., larger than an average distance of sample features, may be set, depending on the application of the inventive technique.

Preferably, the coherence of the illumination light may be minimized for imaging the sample with maximized spatial resolution and detection sensitivity. Alternatively, the coherence of the illumination light may be adapted for tracking moving elements within the sample.

According to preferred applications of the invention, the iSCAT-based imaging of the sample includes at least one of imaging of bioparticles, e.g., protein particles, in particular protein molecules, RNA particles, DNA particles, vesicles etc.; quantitatively assessing of a mass of the bioparticles, e. g., protein particles, in particular protein molecules; imaging particles and/or cell components, in particular vesicles, included in biological cells by mass photometry; and imaging of samples in material science and/or semiconductor technologies. Determining a particle mass by mass photometry is based on measuring the iSCAT contrast of a particle, which is proportional to the mass of the particle. The contrast distinguishing the signal of interest from the background may be defined as the normalized difference in intensity between the detected signal ($I_{det}$) at the particle's location and the background ($I_{bg}$) intensity ($C = (I_{det} - I_{bg})/I_{bg}$). The background intensity may be obtained from regions within the FOV that lack sample structures, like cellular structures, such as areas with only the sample receptacle, like only the cover glass. Here, the reflected light intensity is taken as a baseline for the background, providing a reference point for subsequent contrast calculations in the TSC-iSCAT imaging.

Features disclosed in the context of the method of the invention or embodiments thereof also represent preferred features of the inventive iSCAT microscopy apparatus or embodiments thereof. The aforementioned aspects and inventive and preferred features, in particular with regard to the configuration of the apparatuses as well as the dimensions and compositions of individual components being described in relation to the apparatuses, also apply for the methods. The preferred embodiments, variants and features of the invention described above are combinable with one another as desired.

Brief description of the drawings

Further details and advantages of the invention are described in the following with reference to the attached drawings, which schematically show in:

Figure 1: features of an embodiment of an inventive TSC-iSCAT apparatus;

Figure 2: features of further embodiments of an inventive TSC-iSCAT apparatus;

Figures 3 to 5: further features of the setup and image formation of TSC-iSCAT;

Figure 6: images with a non-invasive, label-free visualization of live COS-7 cell structures using TSC-iSCAT, in particular showing network dynamics and segmentation using SegNet;

Figures 7 and 8: high-speed, high-throughput tracking of vesicles in a COS-7 cell;

Figures 9 and 10: measuring the average speckle grain size of a diffuser mask;

Figure 11: an architecture of SegNet neural network used for image segmentation; and

Figure 12: training data preparation for applying a neural network on detector output data.

Preferred embodiments of the invention

Features of preferred embodiments of the invention are described in the following in exemplary manner with reference to configurations, wherein the coherence setting device is provided in particular by a movable diffuser mask. The invention is not restricted to employing a diffuser mask. Alternatively or additionally, the coherence setting device may be provided by other devices added to the optical relaying device or a component thereof, as outlined above. Furthermore, features of an iSCAT apparatus and operating thereof for iSCAT-based imaging which are known per se from prior art are not described.

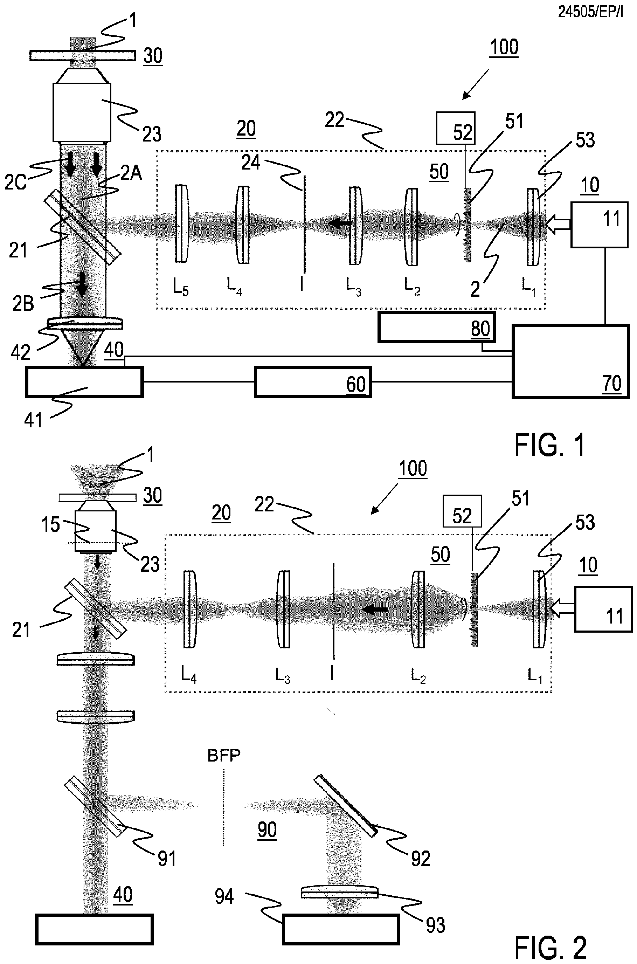

The iSCAT apparatus is described with reference to configurations (see Figures 1, 2) used for experimental tests described below. In particular, the iSCAT apparatus is configured as a microscope. For routine applications, modified operational parameters and/or configurations may be employed in dependency on the application conditions. For example, a sensor device and/or a BFP imaging setup (see below) may be omitted in routine applications.

Tailored spatial coherence iSCAT

Figure 1 is a schematic of a TSC-iSCAT apparatus 100 for iSCAT-based imaging of a sample 1 according to embodiments of the invention. The iSCAT apparatus 100 comprises an illumination device 10, an optical relaying device 20 including a beam splitting device 21, a sample receptacle 30, a detector device 40, and a coherence setting device 50. Optionally, the iSCAT microscopy apparatus 100 may be provided with further components (schematically shown in Figure 1), including, e.g., an image processing device 60 coupled with the detector device 40, a control device 70 being arranged for controlling the iSCAT microscopy apparatus 100, in particular being coupled with the detector device 40 and/or the image processing device 60, and/or a sensor device 80 provided for monitoring purposes. Details of the optical setup are not described as far as they are known as such from conventional iSCAT microscopy.

The illumination device 10 includes a laser source device 11, like a laser of type Lasertack LAB-520-140 or Lasertack FL-525-1200, wavelength $\lambda$ = 525 nm. The optical relaying device 20 comprises illumination optics 22 and an objective 23, in particular microscope objective. With the illumination device 10 and the optical relaying device 20, illumination light 2 is created and relayed to a sample 1 accommodated by the sample receptacle 30. The beam splitting device 21 (schematically illustrated) is arranged for deflecting a first portion 2A of the illumination light 2 towards the sample receptacle 30 and a second portion 2B of the illumination light 2 towards the detector device 40. The sample receptacle 30, like a transparent substrate plate, e.g., made of glass, is arranged above the objective 23, and the sample 1 is arranged on the sample receptacle 30. The beam splitting device 21 is further arranged for superimposing scattering light 2C back-scattered (reflected) at the sample 1 with the second portion 2B of the illumination light 2. The superimposed light field comprising the scattering light 2C and the second portion 2B of the illumination light 2 is imaged onto the detector device 40. The detector device 40, in particular comprising a camera 41 and an imaging lens 42, receives the superimposed light field and creates output signals providing iSCAT signals.

The coherence setting device 50 is arranged for targeted setting a spatial coherence of the illumination light 2. In Figure 1, the coherence setting device 50 comprises a transmissive rotating diffuser mask 51 which is mounted on a driving device 52 (e.g., a DC motor), and e.g., a focussing lens 53 which is the first lens L1 of the illumination optics 22 (see below). Alternatively, one or more other lenses of the illumination optics 22 may be used for coherence setting. Thus, depending on the configuration of a particular embodiment of the iSCAT apparatus 100, at least one part of the optical relaying device 20 simultaneously may provide a part of the coherence setting device 50. Preferably, the diffuser mask 51 may be mechanically decoupled from a support table, like an optical table, carrying the iSCAT apparatus 100 to avoid vibrations.

With more details, the illumination optics 22 of Figure 1 comprise five imaging lenses L1 to L5. The first lens L1 is arranged for imaging the illumination light 2 emitted by the laser device 11 to the diffuser mask 51 placed between first and second lenses (L1 and L2). The first lens L1, in particular the focal length thereof, may be selected for setting a degree of de-coherence by setting a degree of focussing the illumination light 2 on the diffuser mask 51. To this end, the first lens L1 may be changeable, or, preferably, a tunable lens, like a manually tunable or electrically tunable lens, may be used. The tunable lens may have advantages in terms of facilitated adaptation of the setup to sample and iSCAT imaging conditions to be used.

With the second and third lenses (L2 and L3), the illumination light 2 is focussed to the projected back focal plane (BFP) 24 where an iris I is arranged, having a diameter in a range of e.g., 0.1 mm to 25 mm. Focussing into the projected BFP 24 is not necessary, as described with reference to the embodiment of Figure 2 below. With the fourth lens L4 and the fifth lens L5, comprising a wide field lens (WFL), the wide field illumination light field to be relayed to the sample 1 is formed.

The diffuser mask 51 is made of e.g., glass with a surface microstructure having diffusing features (grain) with typical dimensions in a range of e.g., 10 nm to 100 $\mu$m. The diffuser mask 51 is rotatable, so that, by the effect of the rotating diffuser mask 51, a de-coherence is applied to the initially coherent illumination light 2 emitted by the laser device 11. The number of diffusing features of the diffuser mask 51 passed by the illumination light 2, i.e. a size of the light field on the diffuser mask 51, is determined by degree of focussing with the first lens L1. The diffuser mask 51 may be rotatable around an axis coinciding with the optical axis of the illumination optics 22 or being displaced relative to the optical axis.

Figure 2 is a schematic of a TSC-iSCAT apparatus 100 for iSCAT-based imaging of a sample 1 according to alternative embodiments of the invention. Like with Figure 1, the iSCAT apparatus 100 comprises an illumination device 10 with a laser device 11 and an optical relaying device 20 with a beam splitting device 21 and illumination optics 22, a sample receptacle 30, a detector device 40, and a coherence setting device 50. The components 60 to 80 (see Figure 1, not shown in Figure 2) may be provided with the embodiments of Figure 2 as well.

Deviating from Figure 1, the illumination optics 22 comprises four imaging lenses L1 to L4 only, and the iris I of Figure 1 is replaced by a larger iris I, preferably a tunable iris I, having a diameter in a range of e.g., 0.1 mm to 25 mm. By omitting the focussing lens L3 of Figure 1 and employing the enlarged iris I, a portion of the light field transmitted through the diffuser mask 51 is relayed to the sample 1. Thus, possible potential high angle reflections within the components and the surfaces inside the objective 23 may be avoided. The laser beam emitted by the laser device 11 is first focused onto the rotating diffuser mask 51 by lens L1, e.g., with a tunable focal length. The diffuser mask 51 widens the angular spread of the laser beam and fills the aperture of lens L2. Next, the quasi-collimated laser light is guided by lens L3 and lens L4 (wide-field lens, WFL) to the back focal plane (BFP) 15 of the microscope objective 23.

Additionally, Figure 2 illustrates a BFP imaging setup 90 which may be arranged for diagnostic purposes (see below), but may be omitted with practical applications of the invention. The BFP imaging setup 90 comprises a beam splitter 91, a mirror 92 (optionally tiltable), an imaging lens 93 and a camera 94.

As practical examples for the configurations of Figures 1 and 2, the first lens L1 may be selected with a focal plane (optionally tunable) in a range e.g., from 30 mm to 100 mm. The second lens L2 is a lens with a fixed focal length of e.g., 100 mm. The distance between L1 and L2 is e.g., 200 mm. The diffuser mask 51 is positioned preferably at the focal plane of the second lens L2. The diffuser mask 51 is e.g. a Thorlabs DG10-220, and the tunable lens L1 is e.g., a lens ML-20-37 (manufacturer Optotune). Between the laser device 11 and the first lens L1 optical elements, like a polarizer and a $\lambda$/4 plate, may be provided for providing circular polarization of the illumination light 2. The objective 23 is e.g., a high NA objective (Olympus UPlanSApo 100x/1.40NA Oil immersion), and the beam splitter device may be a 50:50 non-polarizing beam splitter. Iris I placed at the projected location of BFP preferably is an adaptive iris I to control the diameter of the beam and, therefore, the INA. The camera 41 is e.g., an ultra-high-speed CMOS camera (Phantom v1610, Vision Research) or a Photon Focus camera (MV1-D1024E-160-CL) for imaging. Utilization of the Phantom camera yields a maximum field of view (FOV) of 80 $\mu$m $\times$ 80 $\mu$m, whereas the Photon Focus camera allows for a maximum FOV of 100 $\mu$m $\times$ 100 $\mu$m.

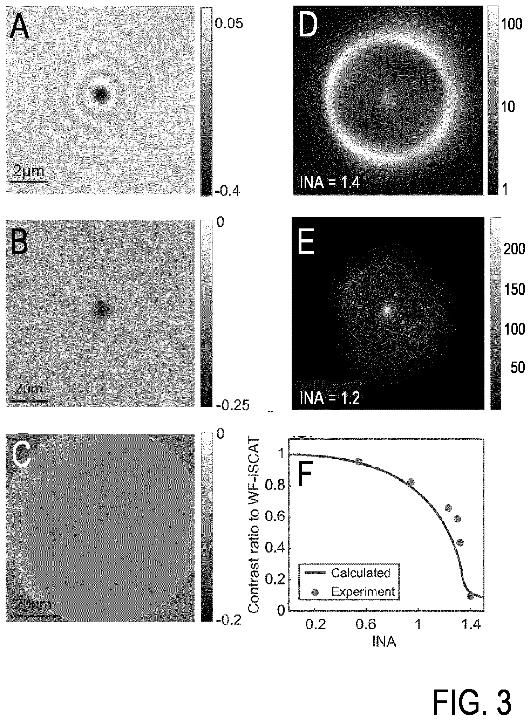

In the following, the speckle pattern suppressing effect of the inventive technique is described, wherein reference is made to the illustrations of Figure 3. Figure 3 illustrates features of TSC-iSCAT contrast enhancement, wherein Figure 3A shows a conventional background-corrected WF-iSCAT image of a 40 nm gold nanoparticle (GNP) at a glass-water interface; Figure 3B, shows a background-corrected TSC-iSCAT image of an 80 nm GNP recorded at a glass-air interface; Figure 3C shows the same as in 3B but over a large FOV of 80 $\mu$m $\times$ 80 $\mu$m imaged at a frame rate of 25 kHz; Figure 3D shows an image of the BFP in the detection path, i.e., after the illumination is reflected from the sample (in this case, the iris in the illumination path was opened, e.g., to 25 mm; Figure 3E shows the same as in 3D but now the iris is nearly closed, e.g., to 0.1 mm, to prevent the light that otherwise would be reflected from the sample surface near the critical angle; and Figure 3F shows the ratio between the contrasts in TSC-iSCAT and WF-iSCAT as a function of the illumination numerical aperture (INA), adjusted by varying the size of the iris I.

In WF-iSCAT, the detected signal can be expressed as

$$I_{\det} \propto |E_s|^2 + |E_r|^2 + 2\,|E_s|\,|E_r|\,\mathrm{Re}(\gamma(\vec{r})) \qquad (1)$$

where $E_r$ and $E_s$ denote the reference and scattered fields at the camera 41, respectively, and $\gamma(\vec{r})$ represents the complex degree of coherence between the scattered and reference electric fields at position $\vec{r}$ on the camera 41 defined as:

$$\gamma(\vec{r}) = \frac{\langle E_s(\vec{r},t) E_r^*(\vec{r},t) \rangle}{\sqrt{\langle |E_s(\vec{r},t)|^2 \rangle \langle |E_r(\vec{r},t)|^2 \rangle}} \qquad (2)$$

In (2), < $\cdots$ > signifies a temporal average. For a monochromatic source with a uniform wavefront, $Re\{\gamma(\vec{r})\}$ reduces to $cos(\phi)$, where $\phi$ is the phase difference between $E_s$ and $E_r$. Such a uniform phase across the sample allows for the interference between $E_r$ and the circular diffraction pattern of $E_s$ caused by the finite aperture of the microscope objective, giving rise to a ring structure across the interferometric point-spread function (iPSF) [32]. Figure 3A presents an example for the WF-iSCAT image of a 40 nm GNP placed on a sample receptacle 30 comprising e.g., a glass substrate. The resulting iPSF is superposed on a weak background speckle caused by the inhomogeneities of the substrate.

The concentric iPSF rings have been shown to play a key role in 3D tracking applications because they encode the axial position of a nanoparticle [28, 33]. However, if the sample medium contains many scattering sources, the superposition of the corresponding rings complicates the image. The inventors have shown that by manipulating the spatial coherence $\gamma(\vec{r})$ of the imaging system, in particular with the first lens L1, one can tailor the extent of the iPSF rings and, thus, find the optimum compromise in each application between the suppression of speckles and the information about the axial position (position along irradiation axis at sample 1) of a nanoparticle encoded in the iPSF rings. In particular, this allows to adjust the coherence volume of the sample 1 that gives rise to the detected speckle patterns.

The comparison between Figures 3A and 3B shows that outer rings of the iPSF vanish when the rotating diffuser mask 51 is inserted while its central lobe is preserved. To appreciate this phenomenon, it is helpful to note that the rotating diffuser mask 51 randomizes the phase of the illumination field at different locations on the sample 1. Hence, for instance a given nanoparticle in the sample 1 is exposed to light at different phases during image acquisition. Nevertheless, this process does not affect the central iPSF lobe because the phase of $E_s$ remains fully synchronized with that of $E_r$ at the position of the nanoparticle on the camera 41. At other locations on the camera 41, where diffraction rings would form, $E_s$ of the nanoparticle has the same phase as in the central position, but the phase of $E_r$ is randomized because the reflected field originates from other parts of the sample than the position of the nanoparticle. As a result, the iPSF rings are washed out.

In WF-iSCAT, the extent of the illumination field is governed by the focal length of the wide field lens (L5 in Figure 1 or L4 in Figure 2), which for practical reasons, typically may be in the order of hundreds of millimeters. Consequently, the illuminated FOV amounts to approximately 10 $\mu$m $\times$ 10 $\mu$m. Insertion of the diffuser mask 51 not only randomizes the wavefront, but it also generates a large angular spread in the illumination beam, which in turn results in a larger illuminated FOV.

The lateral extent of the illumination k-vectors at the BFP, which can be expressed by an illumination numerical aperture (INA) [34], can be controlled by placing the iris I at the focus of lens L3 (see Figure 2). As shown in Figure 3C, the resulting FOV can be nearly two orders of magnitude larger than the commonly used range in WF-iSCAT.

To investigate the role of the iris I, the inventors imaged the BFP 15 of the microscope objective 23 in the detection path, i.e. after the reflection of the laser beam from the sample 1, using the optional BFP imaging setup 90 of Figure 2, as follows

The numerical aperture (NA) for a microscope objective is defined as $NA = n_i \sin\theta$, where $n_i$ is the refractive index of the medium (immersion oil), and $\theta$ is the maximum angle of the k-vectors allowed to enter the microscope objective 23. This definition indicates the angular extent of the k-vectors from the sample 1 that the microscope objective 23 is able to collect.

In inventive TSC-iSCAT, as the interference of the scattered light with the reflected light in particular from the interface of the substrate is measured, the amount of the reflected light plays a role in the resulting normalized contrast on the camera 41. Besides, Fresnel reflection coefficients vary with the incident angle. Therefore, the angular distribution of the illumination in TSC-iSCAT determines the final normalized contrast. Within this framework, the concept of illumination numerical aperture (INA) is utilized to describe the distribution of k-vectors of the illumination across different angles [39].

$$INA = n_i \sin\theta \qquad (3)$$

where $\theta$ is the maximum angle of the k-vectors of the illumination in the sample space.

To characterize the INA in the inventive setup, the back focal plane (BFP) 15 of the microscope objective 23 is imaged, as illustrated in Figure 2. To achieve this, a 4f optical system is employed to project the BFP 15 of the microscope objective 23 on the camera 94. Using ray optics, one can show that the diameter $d_{bfp}$ of the image in the BFP and INA are related through the following equation:

$$INA = \frac{n_i d_{bfp}}{\sqrt{4f^2 + d_{bfp}^2}} \qquad (4)$$

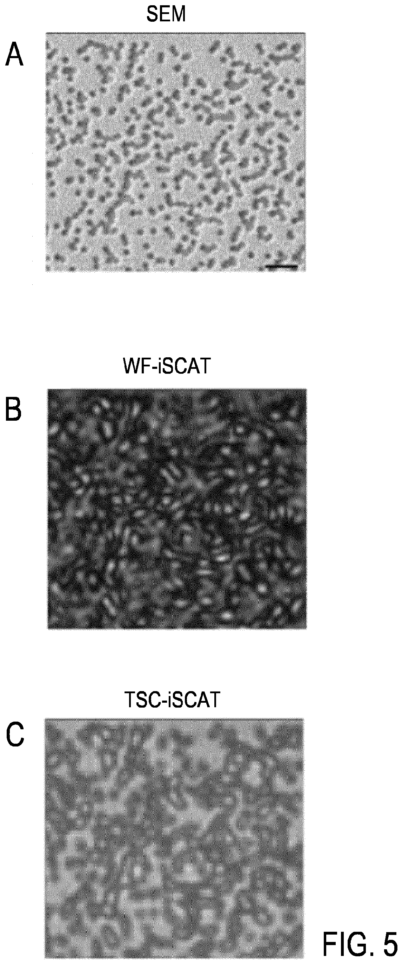

where f is the focal length of the objective 23. In Figure 5 (see below), this equation is employed to assess the INA.

Figure 3D reveals an outer ring on the projected BFP that stems from the illumination k-vectors that undergo strong reflection beyond the critical angle of $\approx 62$ degrees. These components increase $E_r$ and, thus, lower the image contrast. Thus, while this light does not contribute to the scattering signal, it elevates the background, which leads to the reduction of the iSCAT signal contrast. By placing a spatial mask, like the iris in the illumination path and/or by reducing the opening of the iris I allows to control, in particular increase, the contrast. Figure 3E displays an example of the modified illumination in the projected BFP as obtained with the invention. The symbols in Figure 3F display the ratio of the TSC-iSCAT contrast to that of WF-iSCAT for different iris openings, i.e., INA settings. The solid curve shows the theoretical expectation. As mentioned above, in some applications such as three-dimensional (3D) particle tracking [28, 32, 33], the full elimination of the iPSF rings may be avoided.

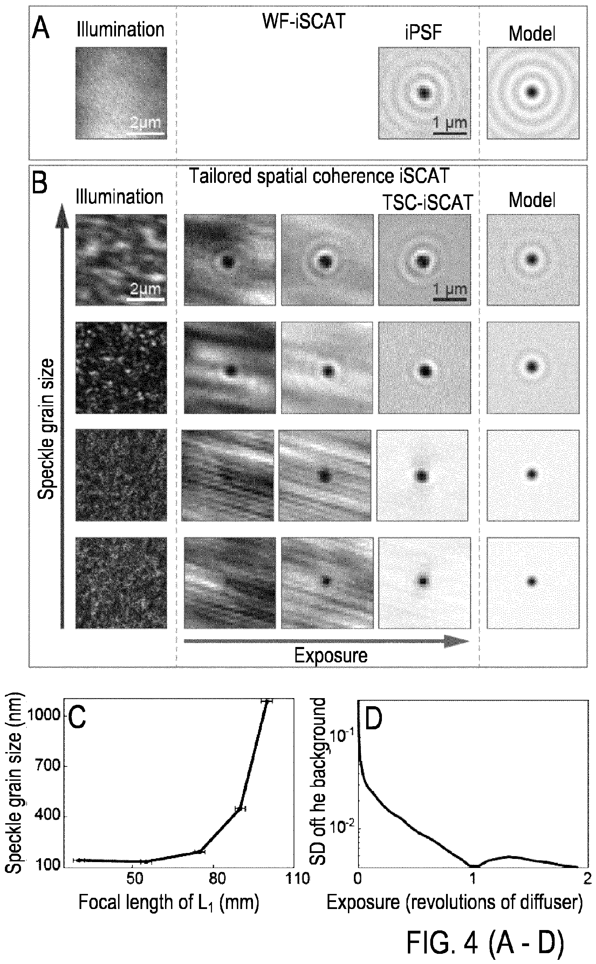

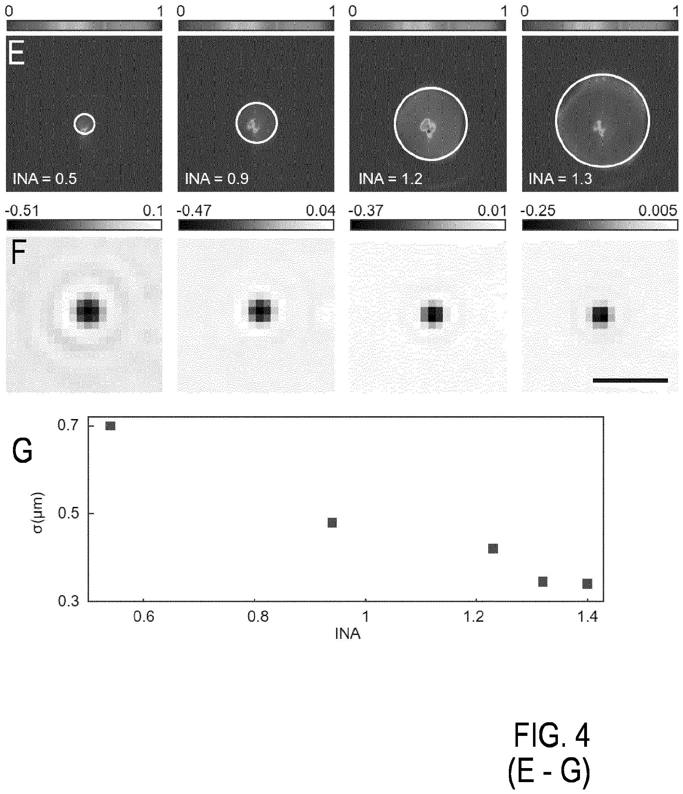

In the following, effects of varying the spatial coherence are described with reference to Figure 4, wherein Figure 4A shows an image of a section of the illuminated FOV (left), measured images of a 40 nm GNP (middle), and theoretical iPSF model (right) in WF-iSCAT; and Figure 4B shows the same as 4A but for TSC-iSCAT mode. Each row of Figure 4B indicates a different effective speckle grain size obtained from an autocorrelation analysis, yielding the full width at half maximum (FWHM) of 1.09 $\mu$m (1st row), 490 nm (2nd row), 192 nm (3rd row), and 141 nm (4th row). These grain sizes correspond to the lens L1 focal lengths of 100 mm, 90 mm, 75 mm, and 30 mm, respectively. In the middle block, the measurement exposure time was varied: ordered from left to right, exposure times were 0.0014, 0.014, and 1, respectively, in units of the diffuser's revolution period. Figure 4C shows an average FWHM of the speckle grain in the illumination field as a function of the focal length of L1; and Figure 4D shows the standard deviation (SD) of the background contrast in the TSC-iSCAT image as a function of the exposure time measured relative to the diffuser mask revolution time. The methodology for quantifying background variation as a function of exposure time, as depicted in Figures 4A to 4D, involves capturing a dynamic speckle pattern at a high frame rate of 10 kHz while the diffuser mask 51 is rotating at 5 revolutions per second. The frames were subsequently averaged computationally to create the images corresponding to different exposure times.

Advantageously, by tailoring the spatial coherence $\gamma(\vec{r})$, one can determine the degree to which the iPSF rings can be suppressed. The inventors have found two variants, which can be employed alone or in combination. Firstly, the effective grain size of the rotating diffuser mask can be adjusted in particular with focussing the lens L1. The effective grain size determines the average feature size of the speckled illumination. In particular, modifying the focal length of L1 alters the projected grain size of the diffuser on the sample plane (or alternatively by adjusting INA in that configuration). This allows one to optimize the degree of spatial coherence for different applications. For instance, the lateral extent of iPSF could be minimized for imaging sub-cellular structures, whereas some degree of ring structure can be left for 3D particle tracking. Secondly, the diffuser mask rotation speed can be adjusted to obtain the preferred degree of spatial averaging.

In the left panel of Figure 4A, a raw example of the FOV is displayed, which is imaged in conventional WF-iSCAT, and a background-corrected image of a nanoparticle is shown in the middle, and its corresponding theoretical model is shown in the right panel. In the matrix of data shown in rows of Figure 4B, the equivalent data recorded in TSC-iSCAT for different effective diffuser grain sizes set by adjusting the focus of lens L1 and for various camera exposure times are presented. As the effective grain size decreases, the spatial coherence is reduced, therefore lowering the number of iPSF's rings.

By increasing the exposure time in each row of the middle block in Figure 4B, one can also observe the suppression of the measured background fluctuations. Figure 4C plots the average illumination grain size as a function of the focal length of lens L1, indicating the ability to tailor the grain size of the illumination and consequently, the degree of spatial coherence. In Figure 4D, it is shown that background noise is reduced for longer integration times. It is minimized when integration is performed for an integer multiple of the diffuser revolution time. As shown in Figure 4B (last row), the smallest grain size yields an iPSF that retains only the central lobe.

In summary, Figures 4A to 4D demonstrate the dependence of the iPSF ring structure on the projected illumination pattern for TSC-iSCAT with different diffuser grain sizes as controlled by the tunable lens L1. As the effective grain size decreases, the effective spatial coherence is reduced, therefore lowering the number of iPSF's rings, as shown in Figure 4B.

Altering INA can be alternatively or additionally employed for adjusting the coherence. Figures 4E to 4G illustrate the effect of INA, which can be set e.g., by one or more of the parts of the optical relaying device 20, on the spatial coherence.

Figure 4E to 4G depict the iPSFs resulting from various INA values that range from 0.5 to 1.3. Figure 4E depicts the projected BFP of the TSC-iSCAT for different INA. Closing the iris changes the illuminated area at the BFP of the objective and, therefore, the INA. Figure 4F provides the corresponding iPSFs for different INAs. The iPSF central contrast shows an inverse relation to INA, and the iPSF rings vanish for increasing INA values. Figure 4G shows the fitted value of $\sigma$ (see equation 9) as a function of INA, indicating that by increasing INA the spatial coherence decreases. These measurements were performed with the focal plane of the lens $L_1$ set to 30 mm.

To showcase that tailoring the spatial coherence allows to image nanoparticles in complex scattering media, the inventors fabricated a well-defined sample made of a glass substrate that contained randomly-distributed features with diameter in the order of 200 nm and depth of 80 nm. Figure 5A presents a scanning electron microscope (SEM) image of such a sample (the scale bar is 1 $\mu$m). In Figure 5B, the strongly speckled WF-iSCAT image of the area of Figure 5A is displayed. In comparison, the image in Figure 5C shows that TSC-iSCAT delivers a speckle-free image of the same structure, in which all features of the SEM image can be clearly recognized.

High-speed label-free cell imaging

The invention has been tested in high-speed label-free imaging of biological cells, as outlined in the following. In particular, the inventors have shown that TSC-iSCAT allows very fast imaging of live cells while maintaining a large FOV and eliminating spurious speckles. The measurements were performed with a minimal power density of 0.076 kW cm$^{-2}$, which is significantly below the threshold of photodamage [35]. Indeed, cells reacting adversely to even prolonged measurements were not observed.

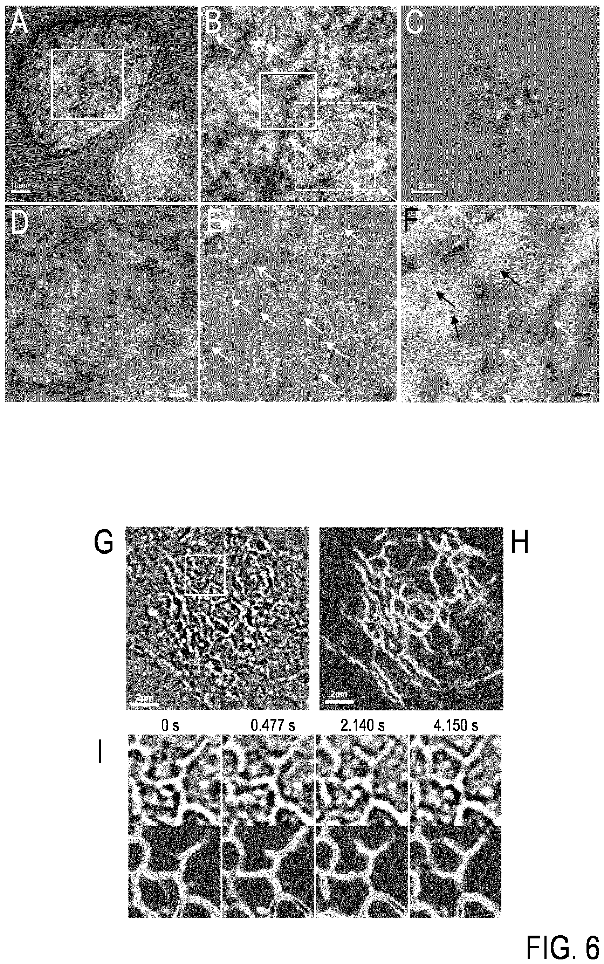

Figure 6 illustrates label-free live cell microscopy with TSC-iSCAT, wherein Figure 6A shows a comprehensive view of a live COS-7 cell and partially a neighboring cell with a FOV of 100 $\mu$m $\times$ 100 $\mu$m. The focal length of lens L1 was set to 30 mm and the iris I was opened. Figure 6B shows a magnified region from the square in 68A, including shows the nucleus (dashed box) and surrounding area with arrows indicating actin bundles that provide structural support to the cell. Surrounding of the actin bundles provided by vesicular structures is presented with varying contrast. The coarse contrast modulations arise from the shape of cellular membranes that are not perfectly flat on the glass surface supporting the cell. Advantageously, an image quality is obtained that is comparable with that of C-iSCAT modality [31].

Figure 6C shows that the corresponding WF-iSCAT image of the region within the drawn square in 6B lacks structural detail, because the image is dominated by a strong speckle landscape that masks finer cellular features. Figure 6D shows close-up view of the nucleus from the dashed square in 6B at a later moment. Focusing on the basal membrane of the nucleus reveals contrast variations that are attributed to invaginations of the nuclear envelope (similar to the C-iSCAT image of the nucleus [31]).

Figure 6E shows the cytoplasm that is densely populated by vesicles (see arrows) some of which diffuse while others are actively transported, and Figure 6F shows elongated tubular mitochondria with negative contrast (white arrows) are surrounded by the fine reticular network of the endoplasmic reticulum (ER, black arrows). Notably, these organelles are highly dynamic on different time scales and constantly interact with their environment which has been difficult to capture with microscopy techniques due to labeling constraints or lack of sensitivity [36]. Indeed, the dynamics and organization of the ER network are of fundamental interest, as this organelle interacts with many cellular components, responds quickly to external stimuli, and plays a vital role in regulating intracellular functions [37].

Endoplasmic reticulum structures and dynamics

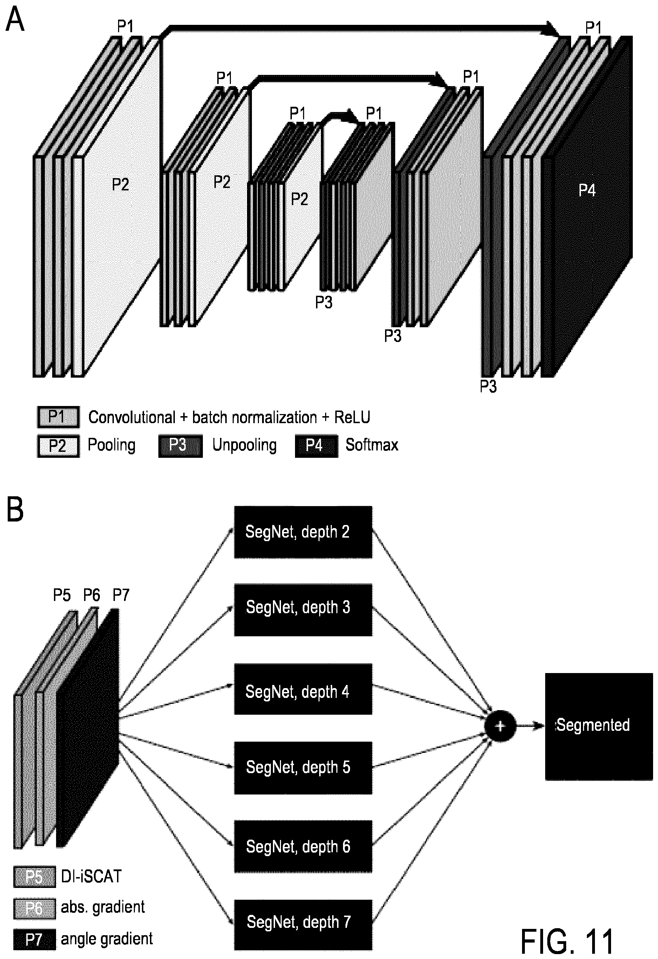

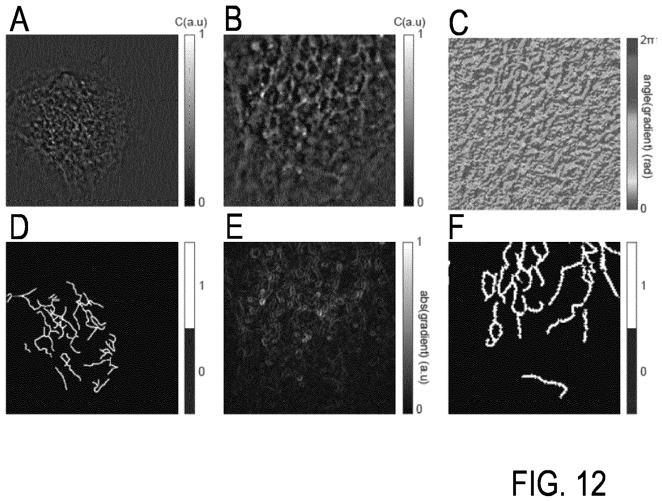

Advantageously, the high sensitivity of iSCAT makes it possible to receive a sizeable signal from a wide range of nanoscopic constituents of a biological cell. However, in some cases, it may be possible that identification of the structures based on their iSCAT contrast alone is not straightforward because the latter can be modulated between fully destructive and fully constructive interference values, depending on the structure's axial position. Moreover, variations in both size and refractive index may affect the contrast. These limitations may be excluded and a specificity similar to what is known in fluorescence microscopy [38] may be achieved, if a neural network, like a SegNet architecture, is used for image processing. The neural network, like the SegNet architecture has a proven capacity to effectively capture and maintain spatial hierarchies in images [39]. An example of the SegNet architecture used is described below with reference to Figures 11 and 12.

Figures 6G and 6H show a TSC-iSCAT image of the ER network and the corresponding output of the neural network's consensus, respectively. Figure 6G shows the ER network recorded at 1.5 kHz, with the focal length of lens L1 set to 30 mm and INA = 1.2. Figure 6H shows a segmented and denoised image of 6G generated by a neural network as described below. Figure 6I shows a close-up time series of the dotted square region from 6G with the corresponding segmented images, showing the dynamics of an ER branch. In particular, Figure 6I shows the dynamics of an ER branch. The neural network recognizes the intracellular features through their characteristics such as shape, size, and granularity.

To train the neural network, a number of manually segmented TSC-iSCAT images was used (see Figure 12). Once the individual networks were trained, their outputs were aggregated to form a consensus segmentation. For every pixel in the image, the number of networks was counted that identified it as part of the ER. This count was then mapped into a value, ranging from 0 to 1 to establish a confidence score. Neural networks of various depths from 2 to 7 layers were used (see Figure 11), whereby each SegNet was equipped with three distinctive input channels of the grayscale image, the amplitude of the image gradient, and the direction of the image gradient. The grayscale image, highlighting intensity variations, serves as the neural network's foundational layer for identifying structural features. The other two channels, the amplitude and direction of the gradient, complement this by highlighting the edges and their orientations within the single image.

### 3D tracking of vesicles over a large field of view

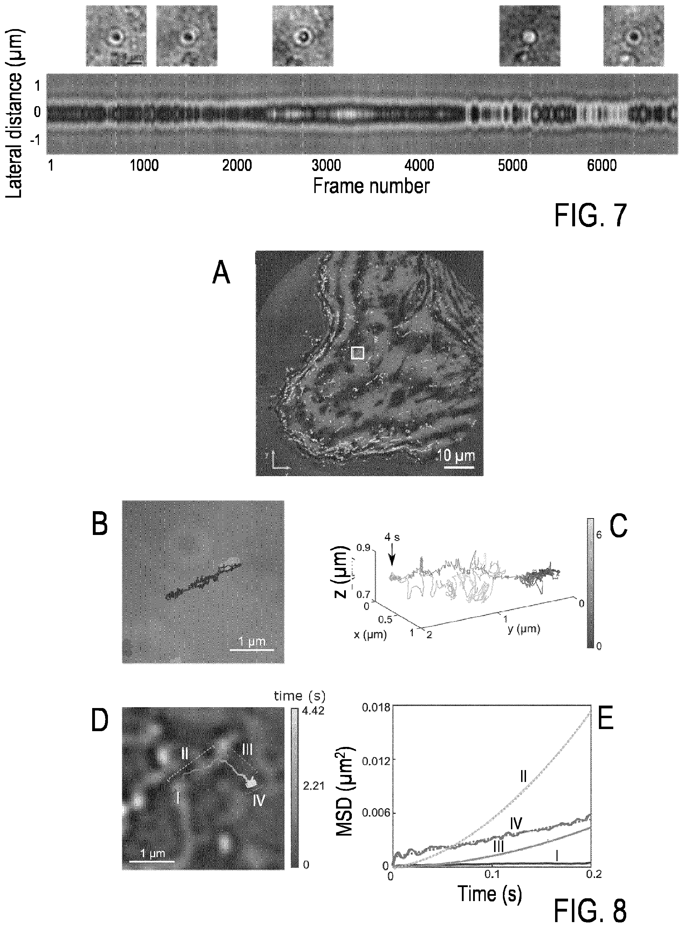

Figures 7 and 8 illustrate the application of TSC-iSCAT to simultaneous 3D tracking of a large number of vesicles in a live biological cell. Here, videos were recorded over a large FOV of 80 $\mu$m $\times$ 80 $\mu$m at a frame rate of 1 kHz over the course of several minutes with an open iris I, i.e., INA=1.4. As presented previously, 3D localization in iSCAT imaging exploits the rich ring structure of the iPSF [28, 33]. Hence, $\gamma(\bar{r})$ was tuned by adjusting the focus of lens L1 to allow for a few rings around the central iPSF lobe. The images in the upper panel of Figure 7 display several snapshots of the lateral iPSF along the trajectory of a single vesicle. The lower panel in Figure 7 presents the radial profile of the iPSFs as a function of time. Analysis of such data provides a 3D trajectory for each vesicle [28, 33].

The 3D tracking approach may be based on analyzing the radial profile of iPSF for high-resolution localization of vesicles. To track vesicles in 3D, each particle may be localized separately in each frame. The 2D localization may be performed by utilizing a method based on the radial variance transform (RVT) that previously was introduced in [44]. The spatial coherence of the system was tuned to obtain a minimal number of concentric rings. The 3D tracking involves calibrating the imaging system and creating a computational model that mimics the experimental iPSF as described in [33].

Figure 8A shows the trajectories of over 1000 vesicles that were monitored simultaneously. While most trajectories depict a diffusive behavior, some indicate directed transport. Figure 8B provides a close-up view of an exemplary region enclosed by the white square in Figure 8A, and Figure 8C displays the 3D representations of that trajectory. The vesicle is transported in the opposite direction after the time point of 4 s. In Figure 8D, a trajectory of a vesicle moving along an ER tubule from another measurement is displayed. Here, the INA is reduced to 1.2 in order to enhance the contrast (see Figure 3F). The large number of data points in the trajectory allowed us to apply a mean-square displacement (MSD) analysis to short segments of the trajectory, thus identifying different regimes of vesicle motion.

When a particle is subjected to active transport superimposed on a diffusive movement, the MSD can be expressed as $MSD(t) = 2\,n\,D\,t + v^2 t^2$, where $n$ signifies the number of dimensions, D is the diffusion coefficient, v denotes the average speed, and t is time.

Figure 8E plots the MSD of the trajectory in Figure 8D. An initial phase of confinement (regime I) suggests potential interactions or temporary anchoring with the ER or the microtubule. Post the 0.6 s mark, the vesicle transitions into an active transport mode (regime II) with an average velocity of 0.579 $\mu$m s$^{-1}$, during which it also changes its direction and its speed (regime III, average velocity was 0.289 $\mu$m s$^{-1}$). In the fourth regime, the vesicle exhibits slow diffusive motion, characterized by a diffusion coefficient of D = 0.05 $\mu$m$^2$ s$^{-1}$, indicating restricted mobility.

### Average grain size of diffused illumination

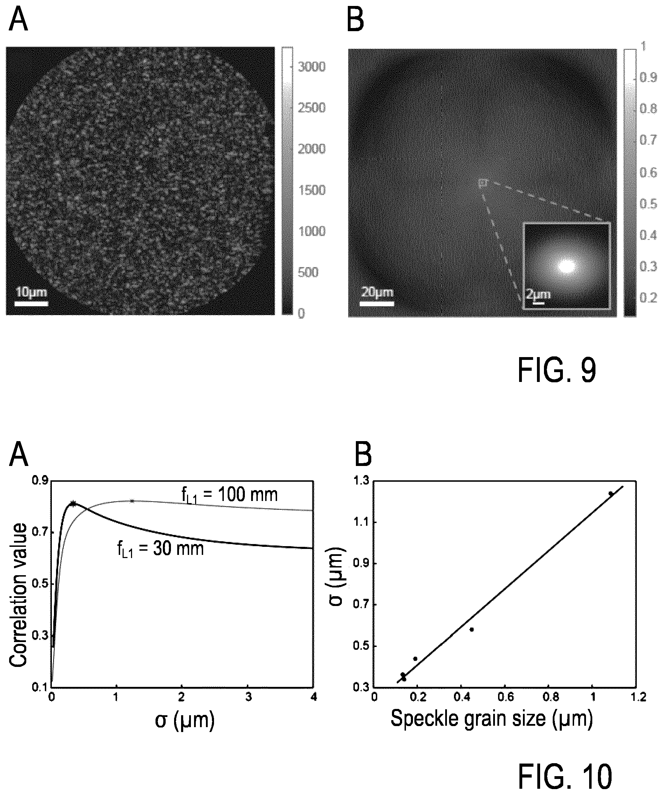

Figure 9 illustrates measuring the average speckle grain size of the illumination at the location of the sample, wherein Figure 9A shows a full field of view image of the speckled illumination with $f_{L1} = 90$ mm when the rotating diffuser mask 51 is off (the bar represents the gray values recorded by the camera, and Figure 9B shows the two dimensional auto-correlation of 9A. The inset shows a close-up view of the region indicated by the square.

The average speckle grain size in TSC-iSCAT is calculated by first capturing an image of the stationary speckle pattern of the diffuser projected onto the sample at the detection. Then a two-dimensional auto-correlation function may be applied to the image. The results of the autocorrelation is a peak, where its width is related to the average size of the lateral intensity modulation. For a fully formed speckle, the full width at half maximum (FWHM) of this peak may be taken as a measure of the average grain size.

With more details, when a coherent light beam interacts with a diffusing medium, it generates a speckle pattern. For fully developed static speckle patterns, where each speckle feature at position (x, y) results from the interference of many scattered waves with random phases, the spatial intensity distribution across the field of view can be approximated by a Rayleigh distribution with the probability density function (PDF) for intensity $I$ given by [45]

$$P(I) = \frac{1}{I_0} \exp\left(-\frac{I}{I_0}\right) \tag{5}$$

where $I_0$ denotes the average intensity.

To determine the average grain size of the speckled illumination, we first capture an image of the stationary speckle pattern of the diffuser at the detector (see Figure 9A). Then a two-dimensional autocorrelation function considering a coordinate lag,

$$\delta r = \sqrt{(\delta x^2 + \delta y^2)} \tag{6}$$

is computed for the image (see Figure 9B). This function shows a pronounced peak at zero displacement, which diminishes with increase in displacement. The full width at half-maximum (FWHM) of the peak serves as a direct indicator of the average speckle grain size.

It turns out that the spatial autocorrelation function associated with the speckle pattern can be approximated by a Gaussian function [46]

$$R(\delta x, \delta y) = A_0 \exp\left(-\frac{\delta r^2}{2\sigma_{sp}^2}\right) \tag{7}$$

Where $A_0$ indicates the peak amplitude at zero spatial lag, $\delta_x$, $\delta_y$ denote the spatial lags in the horizontal and vertical dimensions, and $\delta_{sp}$ is the standard deviation of the speckle feature size distribution. The average speckle size (S) can, thus, be related to the FWHM of the autocorrelation function following the relation

$$S = 2\sqrt{2\ln(2)} \cdot \sigma_{sp} \approx 2.355 \cdot \sigma_{sp'} \tag{8}$$

Simulation of iPSF in TSC-iSCAT

The complex coherence function of the TSC-iSCAT at the detector can be modelled by y(r) = |$\gamma$(r)|$e^{i\phi}$ where

$$|\gamma(r)| = \exp\left(-\frac{r^2}{2\sigma^2}\right) \tag{9}$$

and $\phi$ is the phase difference between the scattered light and the reference field.

To model the iPSF in TSC-iSCAT, the iPSF is modelled under coherent illumination conditions based on a vectorial diffraction model that rigorously accounts for the polarization and complex amplitude distribution of the scattering electric fields as well as the reference beam, as detailed in [47, 48]. Next, the iPSF is modified by the above Gaussian coherence function in Eq. (9) to account for the partial spatial coherence of the illumination.

To identify the model that best approximates the experimentally measured iPSF, vary the Gaussian width ($\sigma$) is varied and the correlation between the simulated and measured iPSFs is computed. The highest correlation coefficient indicates the most accurate representation of the degree of spatial coherence in TSC-iSCAT mode.

Figure 10 illustrates the relation between spatial coherence and the average speckle size, wherein Figure 10A shows correlation values of the modeled iPSF constructed with coherence functions of different widths ($\sigma$) with the

measured iPSF images for $f_{L1}$ = 30 mm and $f_{L1}$ = 100 mm. Asterisks on the curves mark the maximum correlation value and the respective σ. Figure 10B shows that the σ values yield the maximum correlation values for each $f_{L1}$ as a function of the corresponding speckle grain sizes. The line indicates the linear relation between these parameters. Accordingly, the graph in Figure 10B demonstrates a clear linear relationship between the speckle feature size, derived from the FWHM of the autocorrelation function as per Eq. (8) and the standard deviation σ of the Gaussian coherence function in Eq. (9).

SegNet neural network consensus

A consensus of neural networks (NNs) may be used to segment the videos of ER. The consensus involves 6 NNs, each with different depths ranging from 2 to 7, all utilizing the SegNet architecture [7], as illustrated in Figure 11. Figure 11A shows an example of a SegNet NN with a depth of 3 layers, processing an input comprised of a TSC-iSCAT image, its absolute gradient, and gradient angle at the resolution of $256 \times 256$ pixels. The trained NNs with different depths may be used to segment the images in a way that the output of the NNs adds together to form a probability map. Figure 11B shows the schematic of the consensus, that integrates outputs from multiple SegNet models with varying depths, from 2 to 7, to produce a comprehensive and segmented final output.

The NNs may be trained using 27000 sets of training data and 500 sets of validation data sets. The NN with a depth of 7, reached the maximum accuracy of 96% and validation accuracy of 94%. The NNs may be trained using MATLAB 2021b on a GPU (NVIDIA A100-PCIE-40GB). The NNs were trained after 5 epochs which took around 90 minutes. The parameters used for training are listed below:

Optimizer: adam
InitialLearnRate: 0.0004
Shuffle: every-epoch
MiniBatchSize: 10
GradientDecayFactor: 0.9.

The trained NN consensus can segment a video with a resolution of 256 px by 256 px at around 10 Hz.

Training data for neural network consensus

Figure 12 illustrates training data preparation, wherein Figure 12A shows a TSC-iSCAT image of a COS-7 cell in which the illumination background is subtracted (it shows the ER structure in the cell), Figure 12B shows the corresponding manually segmented image of 12A, Figure 12C shows an example of an augmented image of 12A, which is augmented via rotation, translation, and adding extra shot-noise, Figure 12D shows the amplitude of two-dimensional gradient of 12C, Figure 12E shows the angle of two-dimensional gradient of 12C, and Figure 12F shows a segmented ER image corresponding to 12C.

Three images from the beginning, middle, and end of a video were selected to generate the training data for segmentation of the endoplasmic reticulum (ER) in a cell. The backgrounds of these images were subtracted using temporal median background correction. Then these images were manually segmented into a binary mask where ones and zeros were assigned to ER and non-ER regions of the image, respectively. Figures 12A, 12B show a background corrected image and its corresponding binary mask.

To augment the data for training and validation of the neural network, 30, 10, and 30 variations of translations, rotations, and shot-noise realizations were used for each of the three manually segmented images. Their corresponding binary masks were also translated and rotated similar to the images. Finally, 27000 sets of images and binary masks were generated for a video and 500 sets were considered as the data set used for the validation of the NN training process. Figure 12C shows an example of an augmented image of the ER.

To provide further information to the NN to guide it to better recognize the ER structures, two additional images were added for the input of the NN. These include the absolute value of the 2D gradient of the image and its corresponding direction (see Figures 12D, 12E). As the output of the NN, binary masks with the same rotation and translation as the images were created (see Figure 12F).

Summary of particular features and advantages of the invention

With the invention, TSC-iSCAT was introduced as a new mode of iSCAT microscopy in which the spatial coherence of the illumination is tailored. In particular, a key concept in controlling the degree of speckle is to reduce the extent of the interferometric point-spread function, i.e., the number of its rings. The inventors showed that by engineering the coherence of the illumination, one can counteract the speckle background generated by the sample in wide-field iSCAT microsopy. As a concrete, but not restricting implementation, a rotating diffuser mask coupled with an adjustable iris in the illumination pathway is employed, allowing a manipulation of the interference point spread function (iPSF).

Remarkably, the invention ensures the acquisition of speckle-free images at a high throughput of at least 25 kHz across a field of view of at least 1024×1024 pixels while preserving diffraction-limited resolution. The benefits of such advancements in imaging speed and clarity became particularly evident in the application to cellular biology. The detailed intracellular landscapes obtained underscore the method's efficacy. The incorporation of deep neural networks further accentuates this, with the automatic segmentation of the endoplasmic reticulum (ER) network. The ability to track vesicles within the dynamic ER environment in live COS-7 cells exemplifies the system's prowess in capturing both structural details and rapid cellular dynamics.

TSC-iSCAT offers an invaluable bridge between high-resolution imaging, high-sensitive detection, and dynamic 3D tracking. As the demand for non-invasive, high-resolution imaging techniques continues to grow in biological research, the invention makes a significant contribution to the label-free biological imaging and mass photometry.

The features of the invention disclosed in the above description, the drawings and the claims can be of significance both individually as well as in combination or sub-combination for the realization of the invention in its various embodiments. The invention is not restricted to the preferred embodiments described above. Rather a plurality of variants and derivatives is possible which also use the inventive concept and therefore fall within the scope of protection. In addition, the invention also claims protection for the subject and features of the sub claims independently of the features and claims to which they refer.

**Claims**

1. Interferometric scattering microscopy (iSCAT) apparatus (100), being configured for iSCAT-based imaging a sample (1) under investigation, for obtaining a sample image, comprising an optical imaging system with an illumination device (10), an optical relaying device (20) including a beam splitting device (21), a sample receptacle (30) and a detector device (40), wherein

   - the illumination device (10) includes a laser source device (11) being arranged for creating illumination light (2),
   - the optical relaying device (20) is arranged between the laser device (11) and the sample receptacle (30) for relaying the illumination light (2) to the sample receptacle (30),
   - the beam splitting device (21) is arranged for deflecting a first portion (2A) of the illumination light (2) towards the sample receptacle (30), deflecting a second portion (2B) of the illumination light (2) towards the detector device (40) and for superimposing scattering light (2C) scattered at a sample (1) arranged at the sample receptacle (30) with the second portion (2B) of the illumination light (2), and
   - the detector device (40) is arranged for receiving the superimposed scattering light (2C) and second portion (2B) of the illumination light (2) in an image plane of the optical imaging system, **characterized by**
   - a coherence setting device (50) being arranged for targeted setting a point spread function of the optical imaging system in the image plane by applying and controlling a spatial degree of coherence of the illumination light (2) output by the laser source device (11).

2. Interferometric scattering microscopy apparatus according to claim 1, wherein

   - the coherence setting device (50) is configured for adjusting the spatial coherence of the illumination light (2) such that a coherence volume in the sample (1) has a characteristic dimension that generates the point spread function in the image plane with a characteristic coherence length that is smaller than the characteristic correlation length of the sample image, imaged without the coherence setting device.

3. Interferometric scattering microscopy apparatus according to one of the foregoing claims, wherein

   - the coherence setting device (50) is configured for at least one of incorporating a time-varying scattering system into the illumination device (10), coherence setting with a refractive-index modulating medium, coherence setting with a micro-electromechanical mirror array, and increasing the number of transverse lasing modes of the laser source device (11).

4. Interferometric scattering microscopy apparatus according to one of the foregoing claims, wherein

   - the coherence setting device (50) comprises a movable, in particular rotatable, diffuser mask (51) including a distribution of mask elements and being arranged for applying time-varying, spatially randomized wavefront features to the illumination light (2).

5. Interferometric scattering microscopy apparatus according to claim 4, wherein

   - the coherence setting device (50) comprises a driving device (52) being arranged for setting a speed of a movement of the diffuser mask (51).

6. Interferometric scattering microscopy apparatus according to one of the claims 3 to 5, wherein

   - the coherence setting device (50) further comprises at least one coherence setting component of the optical relaying device (20).

7. Interferometric scattering microscopy apparatus according to claim 6, wherein

   - the at least one coherence setting component of the optical relaying device (20) comprises at least one lens (53) having a focal length and being arranged between the laser device (11) and the sample receptacle (30),
   - the at least one lens (53) is arranged for setting an effective grain size of the mask elements of the diffuser mask (51) projected into the sample (1) and adjusted by the focal length of the at least one lens (53), and
   - the coherence of the illumination light (2) is adjusted by setting the effective grain size of the mask elements.

8. Interferometric scattering microscopy apparatus according to claim 7, wherein

   - the at least one lens (53) has a variable focal length, and
   - the at least one lens (53) is arranged for setting the effective grain size by adjusting the focal length thereof.

9. Interferometric scattering microscopy apparatus according to one of the claims 7 to 8, wherein

   - the at least one lens (53) is configured for providing the effective grain size in a range from about 1/2 of the wavelength of the illumination light (2) divided by the numerical aperture of the optical imaging system to about five times the wavelength of the illumination light (2) divided by the numerical aperture of the optical imaging system.

10. Interferometric scattering microscopy apparatus according to one of the claims 7 to 9, wherein

    - the at least one lens (53) comprises at least one tunable lens having a tunable focal length and being arranged between the laser source device (11) and the sample receptacle (30).

11. Interferometric scattering microscopy apparatus according to one of the claims 4 to 10, wherein

    - the coherence setting device (50) further comprises a spatial mask, in particular an iris diaphragm (I), being arranged for suppressing reflection light, for instance total internal reflection light, created by the diffuser mask (51) at the sample receptacle (30).

12. Interferometric scattering microscopy apparatus according to one of the foregoing claims, wherein

    - the detector device (40) is coupled with an image processing (60) device being arranged for processing sample images by applying a neural network on detector output data.

13. Method of interferometric scattering microscopy (iSCAT), including iSCAT-based imaging a sample (1) under investigation, in particular including bioparticles, like protein particles and/or protein molecules, for obtaining a sample image, wherein an interferometric scattering microscopy apparatus (100) according to one of the foregoing claims is employed, wherein

    - the point spread function of the optical imaging system at the sample receptacle (30) is set with the coherence setting device (50) by applying and controlling a spatial degree of coherence of light output by the laser source device (11).

14. Method of interferometric scattering microscopy according to claim 13, wherein

    - the spatial coherence of the illumination light (2) is adjusted such that such that the coherence volume in the sample (1) has a characteristic dimension that generates the point spread function in the image plane with a characteristic coherence length that is smaller than the characteristic correlation length of the sample image, imaged without the coherence setting device.

15. Method of interferometric scattering microscopy according to claim 13 or 14, wherein

- the coherence of the illumination light (2) is adapted for tracking moving elements within the sample (1).

16. Method of interferometric scattering microscopy according to one of the claims 13 to 15, wherein the iSCAT-based imaging of the sample (1) includes at least one of

- imaging of the bioparticles, in particular protein particles, e.g., protein molecules,
- quantitatively assessing of a mass of the bioparticles, in particular protein particles, e.g., protein molecules, by mass photometry,
- imaging particles and/or cell components, in particular vesicles, included in biological cells, and
- imaging of samples in material science and/or semiconductor technologies.

24505/EP/I

FIG. 1

FIG. 2

FIG. 3

FIG. 4 (A - D)

FIG. 4
(E - G)

SEM

A

WF-iSCAT

B

TSC-iSCAT

C

FIG. 5

FIG. 6

FIG. 7

FIG. 8

A

B

FIG. 9

A

B

FIG. 10

A

P1 | Convolutional + batch normalization + ReLU
P2 | Pooling    P3 | Unpooling    P4 | Softmax

B

P5 | DI-iSCAT
P6 | abs. gradient
P7 | angle gradient

SegNet, depth 2
SegNet, depth 3
SegNet, depth 4
SegNet, depth 5
SegNet, depth 6
SegNet, depth 7

Segmented

FIG. 11

FIG. 12

Europäisches
Patentamt

European
Patent Office

Office européen
des brevets

**EUROPEAN SEARCH REPORT**

**Application Number**

EP 24 18 5820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2024/033664 A1 (REFEYN LTD [GB]) 15 February 2024 (2024-02-15) <br> * page 4, line 19 - line 21 * <br> * page 8, line 28 - page 9, line 7 * <br> * page 14, line 11 * <br> * page 18, line 12 - line 19 * <br> * page 19, line 3 - line 4 * <br> * page 20, line 7 - page 22, line 15 * <br> * page 28, line 7 - line 14 * <br> * claims 1,11 * <br> * figure 2 * | 1-3,6,7, 11,13-16 | INV. <br> G01N15/00 <br> G01N21/45 <br> G01N21/47 |
| X <br><br> Y | US 2019/195776 A1 (LIEBEL MATZ [ES] ET AL) 27 June 2019 (2019-06-27) <br> * paragraphs [0015], [0074], [0079], [0080], [0084], [0108], [0111] - [0131] * <br> * claim 1 * <br> * figure 3 * | 1-3,6,9, 13-16 <br> 8,10-12 | |
| X <br><br><br><br><br> Y | STOLLMANN A ET AL: "Molecular fingerprinting of biological nanoparticles with a label-free optofluidic platform", ARXIV.ORG, CORNELL UNIVERSITY LIBRARY, 201 OLIN LIBRARY CORNELL UNIVERSITY ITHACA, NY 14853, 11 August 2023 (2023-08-11), XP091591351, <br> * title * <br> * abstract * <br> * page 2, line 10 * <br> * page 3, line 34 - page 4, line 14 * <br> * figure 1 * | 1-7,9, 13-16 <br><br><br><br><br> 8,10-12 | **TECHNICAL FIELDS SEARCHED (IPC)** <br><br> G01N |

-/--

The present search report has been drawn up for all claims

| Place of search | Date of completion of the search | Examiner |
|---|---|---|
| Munich | 21 November 2024 | Witte, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 18 5820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ASTRATOV V N ET AL: "Roadmap on Label-Free Super-Resolution Imaging", LASER & PHOTONICS REVIEWS, WILEY-VCH VERLAG, DE, vol. 17, no. 12, 30 October 2023 (2023-10-30), page n/a, XP072549607, ISSN: 1863-8880, DOI: 10.1002/LPOR.202200029 | 1-6,9, 13-16 | |
| Y | * page 22, left-hand column, line 1 - line 7 * <br> * page 28, right-hand column, line 33 - line 45 * <br> * figure 15a * <br> * page 7, left-hand column, line 33 - line 39 * <br> ----- | 8,10-12 | |
| Y | ZEQUN J ET AL: "Laser beam modulation with a fast focus tunable lens for speckle reduction in laser projection displays", OPTICS AND LASERS IN ENGINEERING, ELSEVIER, AMSTERDAM, NL, vol. 126, November 2019 (2019-11), XP085927911, ISSN: 0143-8166, DOI: 10.1016/J.OPTLASENG.2019.105918 [retrieved on 2019-11-01] * figure 6 * <br> ----- | 8,10 | TECHNICAL FIELDS SEARCHED (IPC) |
| X | US 2020/132977 A1 (HIDAKA YASUHIRO [JP] ET AL) 30 April 2020 (2020-04-30) | 1,4,11 | |
| Y | * figure 1 * <br> ----- | 11 | |
| Y | WO 2023/083433 A1 (MAX PLANCK GESELLSCHAFT [DE]) 19 May 2023 (2023-05-19) * page 12, line 26 - line 35 * <br> ----- | 12 | |

The present search report has been drawn up for all claims

| Place of search | Date of completion of the search | Examiner |
|---|---|---|
| Munich | 21 November 2024 | Witte, Thomas |

EPO FORM 1503 03.82 (P04C01)

**ANNEX TO THE EUROPEAN SEARCH REPORT
ON EUROPEAN PATENT APPLICATION NO.**

EP 24 18 5820

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2024

| Patent document cited in search report | Publication date | Patent family member(s) | Publication date |
|---|---|---|---|
| WO 2024033664 A1 | 15-02-2024 | NONE | |
| US 2019195776 A1 | 27-06-2019 | EP 3276389 A1 | 31-01-2018 |
| | | EP 3491445 A1 | 05-06-2019 |
| | | US 2019195776 A1 | 27-06-2019 |
| | | WO 2018019934 A1 | 01-02-2018 |
| US 2020132977 A1 | 30-04-2020 | NONE | |
| WO 2023083433 A1 | 19-05-2023 | CN 118251588 A | 25-06-2024 |
| | | EP 4430377 A1 | 18-09-2024 |
| | | JP 2024541300 A | 08-11-2024 |
| | | KR 20240107127 A | 08-07-2024 |
| | | WO 2023083433 A1 | 19-05-2023 |

EPO FORM P0459

For more details about this annex : see Official Journal of the European Patent Office, No. 12/82

**EP 4 575 456 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. LINDFORS** ; **T. KALKBRENNER** ; **P. STOLLER** ; **V. SANDOGHDAR**. Detection and Spectroscopy of Gold Nanoparticles Using Supercontinuum White Light Confocal Microscopy. *Phys. Rev. Lett.*, 2004, vol. 93, 037401
- **R. W. TAYLOR** ; **V. SANDOGHDAR**. Interferometric Scattering Microscopy: Seeing Single Nanoparticles and Molecules via Rayleigh Scattering. *Nano Lett.*, 2019, vol. 19, 4827-4835
- **Y.-H. LIN** ; **W.-L. CHANG** ; **C.-L. HSIEH**. Shot-noise limited localization of single 20 nm gold particles with nanometer spatial precision within microseconds. *Opt. Express*, 2014, vol. 22, 9159-9170
- **H. EWERS** ; **V. JACOBSEN** ; **E. KLOTZSCH et al.** Label-free optical detection and tracking of single virions bound to their receptors in supported membrane bilayers. *Nano Lett.*, 2007, vol. 7, 2263-2266
- **P. KUKURA** ; **H. EWERS** ; **C. MÜLLER et al.** High-speed nanoscopic tracking of the position and orientation of a single virus. *Nat. Methods*, 2009, vol. 6, 923-927
- **R. F. GARMANN** ; **A. M. GOLDFAIN** ; **C. R. TANIMOTO et al.** Single-particle studies of the effects of RNA-protein interactions on the self-assembly of RNA virus particles. *Proc. Natl. Acad. Sci. U.S.A.*, 2022, vol. 119, e2206292119
- **Y.-F. HUANG** ; **G.-Y. ZHUO** ; **C.-Y. CHOU et al.** Coherent brightfield microscopy provides the spatiotemporal resolution to study early stage viral infection in live cells. *ACS Nano*, 2017, vol. 11, 2575-2585
- **A. D. KASHKANOVA** ; **M. BLESSING** ; **A. GEMEINHARDT et al.** Precision size and refractive index analysis of weakly scattering nanoparticles in polydispersions. *Nat. Methods*, 2022, vol. 19, 586-593
- **A. D. KASHKANOVA** ; **M. BLESSING** ; **M. REISCHKE et al.** Label-free discrimination of extracellular vesicles from large lipoproteins. *J. Extracell. Vesicles*, 2023, vol. 12, 12348
- **J. ORTEGA ARROYO** ; **J. ANDRECKA** ; **K. SPILLANE et al.** Label-free, all-optical detection, imaging, and tracking of a single protein. *Nano Lett.*, 2014, vol. 14, 2065-2070
- **M. PILIARIK** ; **V. SANDOGHDAR**. Direct optical sensing of single unlabelled proteins and super-resolution imaging of their binding sites. *Nat. Commun*, 2014, vol. 5, 4495
- **G. YOUNG** ; **N. HUNDT** ; **D. COLE et al.** Quantitative mass imaging of single biological macromolecules. *Science*, 2018, vol. 360, 423-427
- **M. DAHMARDEH** ; **H. MIRZAALIAN DASTJERDI** ; **H. MAZAL et al.** Self-supervised machine learning pushes the sensitivity limit in label-free detection of single proteins below 10 kDa. *Nat. Methods*, 2023, vol. 20, 442-447
- **M. CELEBRANO** ; **P. KUKURA** ; **A. RENN** ; **V. SANDOGHDAR**. Single-molecule imaging by optical absorption. *Nat. Photonics*, 2011, vol. 5, 95-98
- **Y. PARK** ; **W. CHOI** ; **Z. YAQOOB et al.** Speckle-field digital holographic microscopy. *Opt. Express*, 2009, vol. 17, 12285-12292
- **M. N. AKRAM** ; **Z. TONG** ; **G. OUYANG et al.** Laser speckle reduction due to spatial and angular diversity introduced by fast scanning micromirror. *Appl. Opt.*, 2010, vol. 49, 3297-3304
- **P. F. ALMORO** ; **G. PEDRINI** ; **P. N. GUNDU et al.** Phase microscopy of technical and biological samples through random phase modulation with a diffuser. *Opt. Lett*, 2010, vol. 35, 1028-1030
- **Y. CHOI** ; **T. D. YANG** ; **K. J. LEE** ; **W. CHOI**. Full-field and single-shot quantitative phase microscopy using dynamic speckle illumination. *Opt. Lett.*, 2011, vol. 36, 2465-2467
- **B. REDDING** ; **M. A. CHOMA** ; **H. CAO**. Speckle-free laser imaging using random laser illumination. *Nat. Photonics*, 2012, vol. 6, 355-359
- **M. NIXON** ; **B. REDDING** ; **A. FRIESEM et al.** Efficient method for controlling the spatial coherence of a laser. *Opt. Lett.*, 2013, vol. 38, 3858-3861
- **T. H. NGUYEN** ; **C. EDWARDS** ; **L. L. GODDARD** ; **G. POPESCU**. Quantitative phase imaging with partially coherent illumination. *Opt. Lett.*, 2014, vol. 39, 5511-5514
- **H. FARROKHI** ; **T. M. ROHITH** ; **J. BOONRUANGKAN et al.** High-brightness laser imaging with tunable speckle reduction enabled by electroactive micro-optic diffusers. *Sci. Rep.*, 2017, vol. 7, 15318
- **V. BIANCO** ; **P. MEMMOLO** ; **M. LEO et al.** Strategies for reducing speckle noise in digital holography. *Light Sci. Appl.*, 2018, vol. 7, 48
- **CAO, H.** ; **CHRIKI, R.** ; **BITTNER, S** ; **FRIESEM, A. A.** ; **DAVIDSON, N.** Complex lasers with controllable coherence.. *Nat. Rev. Phys.*, 2019, vol. 1, 156-168

- **H. CAO** ; **R. CHRIKI** ; **S. BITTNER et al.** Complex lasers with controllable coherence. *Nat. Rev. Phys.*, 2019, vol. 1, 156-168
- **I.-B. LEE** ; **H.-M. MOON** ; **J.-S. PARK et al.** Three-dimensional interferometric scattering microscopy via remote focusing technique. *Opt. Lett*, 2020, vol. 45, 2628-2631
- **H. M. DASTJERDI** ; **M. DAHMARDEH** ; **A. GEMEIN-HARDT et al.** Optimized analysis for sensitive detection and analysis of single proteins via interferometric scattering microscopy. *J. Phys. D: Appl. Phys*, 2021, vol. 55, 054002
- **R. W. TAYLOR** ; **R. G. MAHMOODABADI** ; **V. RAUSCHENBERGER et al.** Interferometric scattering microscopy reveals microsecond nanoscopic protein motion on a live cell membrane. *Nat. Photonics*, 2019, vol. 13, 480-487
- **N. JIAO** ; **S. LIN** ; **D. FENG et al.** Defocus-integration interferometric scattering microscopy for speckle suppression and enhancing nanoparticle detection on substrate. *arXiv:2402.16527*, 2024
- **Y.-T. HSIAO** ; **T.-Y. WU** ; **B.-K. WU et al.** Spinning disk interferometric scattering confocal microscopy captures millisecond timescale dynamics of living cells. *Opt. Express*, 2022, vol. 30, 45233-45245
- **M. KÜPPERS** ; **D. ALBRECHT** ; **A. D. KASHKA-NOVA et al.** Confocal interferometric scattering microscopy reveals 3D nanoscopic structure and dynamics in live cells. *Nat. Commun.*, 2023, vol. 14, 1962
- **R. G. MAHMOODABADI** ; **R. W. TAYLOR** ; **M. KALLER et al.** Point spread function in interferometric scattering microscopy (iSCAT). Part I: aberrations in defocusing and axial localization. *Opt. Express*, 2020, vol. 28, 25969-25988
- **K. KASAIAN** ; **M. MAZAHERI** ; **V. SANDOGHDAR**. Long-range three-dimensional tracking of nanoparticles using interferometric scattering (iSCAT) microscopy. *arXiv:2401.12939*, 2024
- **P. J. TADROUS**. Use of a refractive index-coupled diffuser to both generate and measure high-numerical aperture illumination for light microscopy. *J. Microsc.*, 2023, vol. 292, 135-147
- **S. WÄLDCHEN** ; **J. LEHMANN** ; **T. KLEIN et al.** Light-induced cell damage in live-cell super-resolution microscopy. *Sci. Rep.*, 2015, vol. 5, 15348
- **J. NIXON-ABELL** ; **C. J. OBARA** ; **A. V. WEIGEL et al.** Increased spatiotemporal resolution reveals highly dynamic dense tubular matrices in the peripheral ER. *Science*, 2016, vol. 354, aaf3928
- **H. T. PERKINS** ; **V. ALLAN**. Intertwined and finely balanced: endoplasmic reticulum morphology, dynamics, function, and diseases. *Cells*, 2021, vol. 10, 2341
- **C. OUNKOMOL** ; **S. SESHAMANI** ; **M. M. MALECK-AR et al.** Label-free prediction of three-dimensional fluorescence images from transmitted-light microscopy. *Nat. Methods*, 2018, vol. 15, 917-920
- **V. BADRINARAYANAN** ; **A. KENDALL** ; **R. CIPOL-LA**. SegNet: A deep convolutional encoder-decoder architecture for image segmentation. *IEEE Trans. Pattern Anal. Mach. Intell.*, 2017, vol. 39, 2481-2495
- **A. CURTIS**. The mechanism of adhesion of cells to glass: a study by interference reflection microscopy. *J. Cell Biol.*, 1964, vol. 20, 199-215
- **L. LIMOZIN** ; **K. SENGUPTA**. Quantitative reflection interference contrast microscopy (RICM) in soft matter and cell adhesion. *ChemPhysChem*, 2009, vol. 10, 2752-2768
- **V. A. BARR** ; **S. C. BUNNELL**. Interference reflection microscopy. *Curr. Protoc. Cell Biol.*, 2009, vol. 45, 4-23
- **T. H. NGUYEN** ; **M. E. KANDEL** ; **M. RUBESSA et al.** Gradient light interference microscopy for 3D imaging of unlabeled specimens. *Nat. Commun.*, 2017, vol. 8, 210
- **A. D. KASHKANOVA** ; **A. B. SHKARIN** ; **R. G. MAHMOODABADI et al.** Precision single-particle localization using radial variance transform. *Opt. Express*, 2021, vol. 29, 11070-11083
- **J. W. GOODMAN**. Some fundamental properties of speckle. *J. Opt. Soc. Am.*, 1976, vol. 66, 1145-1150